(19)

**Europäisches Patentamt**

**European Patent Office**

**Office européen des brevets**

(11) **EP 3 462 623 B1**

(12) **EUROPEAN PATENT SPECIFICATION**

(45) Date of publication and mention
of the grant of the patent:
**29.04.2020 Bulletin 2020/18**

(21) Application number: **16906600.8**

(22) Date of filing: **28.06.2016**

(51) Int Cl.:
**H04B 1/10** *(2006.01)*          **H04B 1/02** *(2006.01)*
**H04B 10/00** *(2013.01)*

(86) International application number:
**PCT/CN2016/087495**

(87) International publication number:
**WO 2018/000198 (04.01.2018 Gazette 2018/01)**

(54) **METHOD AND DEVICE FOR TRANSMITTING AND RECEIVING DATA**

VERFAHREN UND VORRICHTUNG ZUM ÜBERTRAGEN UND EMPFANGEN VON DATEN

PROCÉDÉ ET DISPOSITIF POUR TRANSMETTRE ET RECEVOIR DES DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.04.2019 Bulletin 2019/14**

(73) Proprietor: **Huawei Technologies Co., Ltd.
Longgang District
Shenzhen, Guangdong 518129 (CN)**

(72) Inventors:
 • **CAI, Meng
Shenzhen
Guangdong 518129 (CN)**

 • **LI, Kun
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
**CN-A- 101 394 197     CN-A- 102 118 191
CN-U- 201 682 618      US-A1- 2013 163 524**

 • **ERICSSON AB et al.: "Common Public Radio
Interface (CPRI); Interface Specification", CPRI
SPECIFICATION V7.0, 9 October 2015
(2015-10-09), XP055413300,**

EP 3 462 623 B1

## Description

### TECHNICAL FIELD

The present invention relates to the field of communications technologies, and more specifically, to a data sending method, a data receiving method, and a device.

### BACKGROUND

Data transmitted between a Baseband Unit (BBU) and an Radio Remote Unit (RRU) in a distributed base station includes common information and radio signal information. The common information and the radio signal information may constitute digital fronthaul data of a wireless network according to a standard open interface protocol, and may be bidirectionally transmitted between the BBU and the RRU by using an optical fiber, a cable, or a microwave. The radio signal information may carry one or more pieces of antenna-carrier In-phase/Quadrature (I/Q) data.

When the standard open interface protocol is a common public radio interface (CPRI) protocol, the digital fronthaul data is referred to as a CPRI frame. In this case, the common information is referred to as a control word (CW), and the radio signal information is referred to as an antenna-carrier (AxC).

In microwave channel transmission, the CPRI frame is usually transmitted by using a radio over radio (ROR)/analog radio over fiber (AROF) system, and this achieves high spectrum utilization. However, channel quality of a microwave system changes with weather. When the CPRI frame is transmitted by using the ROR/AROF system, an error vector magnitude (EVM) of a microwave channel may become large because channel quality becomes poor. Consequently, antenna-carrier I/Q data for which a higher order modulation format is used in the CPRI frame cannot be transmitted in the microwave system.

An existing solution is to identify a highest order modulation format used in the CPRI frame, and reserve a fade margin for an EVM requirement of the highest order modulation format with reference to a poorest microwave channel state. However, a transmit signal needs to have a quite high signal-to-noise ratio because of a relatively large fade margin. Consequently, the transmit signal with the quite high signal-to-noise ratio can be transmitted only for a relatively short distance, and a microwave transmission distance requirement cannot be met.

CN102118191 discloses a transmission method of common public radio interface data.

### SUMMARY

Embodiments of the present invention provide a data sending method, a data receiving method, and a device, so as to resolve the following problem: In CPRI frame transmission in an ROR/AROF system, when channel quality of a microwave channel becomes poor, antenna-carrier I/Q data for which a higher order modulation format is used in a CPRI frame cannot be transmitted.

According to a first aspect, a microwave sending device is provided, including: a receiver, configured to receive a common public radio interface CPRI frame, and send the CPRI frame to a separator; the separator, configured to: receive the CPRI frame from the receiver; separate a control word CW and antenna-carrier I/Q data from the CPRI frame, where the antenna-carrier I/Q data includes first I/Q data; and send the CW to a first modulator, and send the first I/Q data to a data processor; the first modulator, configured to: receive the CW from the separator; modulate the CW to obtain a modulated CW; and send the modulated CW to a combiner; the data processor, configured to: receive the first I/Q data from the separator; copy the first I/Q data to obtain two pieces of first I/Q data; modulate a first piece of first I/Q data to obtain modulated first I/Q data; determine whether channel quality of a microwave channel meets a requirement; and if the channel quality of the microwave channel does not meet the requirement, send the modulated first I/Q data to the combiner; the combiner, configured to: receive the modulated CW from the first modulator; receive the modulated first I/Q data from the data processor; generate a first microwave air interface frame based on the modulated first I/Q data and the modulated CW; and send the first microwave air interface frame to a digital transmitter; and the digital transmitter, configured to receive the first microwave air interface frame from the combiner, and send the first microwave air interface frame by using the microwave channel.

According to a second aspect, a microwave sending device is provided, including: a receiver, configured to receive a common public radio interface CPRI frame, and send the CPRI frame to a separator; the separator, configured to: receive the CPRI frame from the receiver; separate a control word CW and antenna-carrier I/Q data from the CPRI frame, where the antenna-carrier I/Q data includes first I/Q data; and send the CW to a first modulator, and send the first I/Q data to a data processor; the first modulator, configured to: receive the CW from the separator; modulate the CW to obtain a modulated CW; and send the modulated CW to a combiner; the data processor, configured to: receive the first I/Q data from the separator; determine whether channel quality of a microwave channel meets a requirement; and if the channel quality of the microwave channel does not meet the requirement, modulate the first I/Q data to obtain modulated first I/Q data, and send the modulated first I/Q data to the combiner; the combiner, configured to: receive the modulated CW from the first modulator; receive the modulated first I/Q data from the data processor; generate a first microwave air interface frame based on the modulated first I/Q data and the modulated CW; and send the first microwave air interface frame to a digital transmitter; and the digital transmitter, configured to receive the first microwave air interface frame from the combiner, and send the first microwave air interface frame by using the microwave channel.

In this embodiment of the present invention, the CW and the antenna-carrier I/Q data in the CPRI frame are separately processed. If the channel quality of the microwave channel does not meet the requirement, the first microwave air interface frame is generated based on the modulated first I/Q data and the modulated CW, so that a transmission distance requirement for a microwave system can be met without a need to reserve a large fade margin.

With reference to the first aspect or the second aspect, in a first possible implementation of the first aspect or the second aspect, the data processor is further configured to: if the channel quality of the microwave channel meets the requirement, send the first I/Q data to the combiner; the combiner is further configured to: receive the first I/Q data from the data processor; generate a second microwave air interface frame based on the first I/Q data and the modulated CW; and send the second microwave air interface frame to the digital transmitter; and the digital transmitter is further configured to receive the second microwave air interface frame from the combiner, and send the second microwave air interface frame by using the microwave channel.

In this embodiment of the present invention, if the channel quality of the microwave channel meets the requirement, the first I/Q data is transmitted based on an original modulation format, so that spectrum utilization loss is further reduced.

With reference to the first aspect or the first possible implementation of the first aspect, or with reference to the second aspect or the first possible implementation of the second aspect, in a second possible implementation of the first aspect or the second aspect, the device further includes: an EVM receiver, configured to receive an error vector magnitude EVM of the microwave channel, and send the EVM of the microwave channel to the data processor; and the data processor is specifically configured to: receive the EVM of the microwave channel from the EVM receiver; determine whether the EVM of the microwave channel is less than a maximum EVM required for the first I/Q data; and if the EVM of the microwave channel is less than the maximum EVM required for the first I/Q data, consider that the channel quality of the microwave channel meets the requirement; otherwise, consider that the channel quality of the microwave channel does not meet the requirement.

With reference to the first aspect or the first possible implementation of the first aspect, or with reference to the second aspect or the first possible implementation of the second aspect, in a third possible implementation of the first aspect or the second aspect, the receiver is further configured to receive a data frame, and send the data frame to the combiner; and the combiner is further configured to: receive the data frame from the receiver; and if the channel quality of the microwave channel does not meet the requirement, generate the first microwave air interface frame based on the modulated first I/Q data, the modulated CW, and the data frame; or if the channel quality of the microwave channel meets the requirement, generate the second microwave air interface frame based on the first I/Q data, the modulated CW, and the data frame.

With reference to the third possible implementation of the first aspect or the second aspect, in a fourth possible implementation of the first aspect or the second aspect, the device further includes: a rate adjuster, configured to: receive the data frame from the receiver; determine whether the channel quality of the microwave channel meets the requirement; and if the channel quality of the microwave channel meets the requirement, keep the data frame occupying first bandwidth, and send the data frame to the combiner; or if the channel quality of the microwave channel does not meet the requirement, change bandwidth occupied by the data frame into second bandwidth, and send the adjusted data frame to the combiner, where the data frame and the CPRI frame jointly occupy bandwidth of the microwave channel, and the second bandwidth is less than the first bandwidth. In this embodiment of the present invention, the bandwidth of the data frame is adjusted based on change of the microwave channel quality, to ensure normal transmission of a hybrid service including the data frame and the CPRI frame.

With reference to the first aspect or the first possible implementation of the first aspect, or with reference to the second aspect or the first possible implementation of the second aspect, in a fifth possible implementation of the first aspect or the second aspect, the first I/Q data is higher order modulation I/Q data; the separator is further configured to separate second I/Q data from the CPRI frame, and send the second I/Q data to the combiner, where the second I/Q data is lower order modulation I/Q data; and the combiner is further configured to: receive the second I/Q data from the separator; generate the first microwave air interface frame based on the modulated first I/Q data, the modulated CW, and the second I/Q data; and generate the second microwave air interface frame based on the first I/Q data, the modulated CW, and the second I/Q data. In this embodiment of the present invention, lower order modulation is performed only on the first I/Q data when the channel quality becomes poor, so that spectrum utilization loss in a microwave system is further reduced.

With reference to the first aspect or the first possible implementation of the first aspect, in a sixth possible implementation of the first aspect, the data processor specifically includes: a splitter, configured to: receive the first I/Q data from the separator; copy the first I/Q data to obtain two pieces of first I/Q data; and send a first piece of first I/Q data to a second modulator, and send a second piece of first I/Q data to a selector; the second modulator, configured to: receive the first I/Q data from the splitter; modulate the first I/Q data to obtain modulated first I/Q data; and send the modulated first I/Q data to the selector; and the selector, configured to: receive the first I/Q data from the splitter; receive the modulated first I/Q data from the second modulator; determine whether the channel quality of the microwave channel meets the requirement; and if the channel quality of the microwave channel does not meet the requirement, send the modulated first I/Q data to the combiner; or if the channel quality of the microwave channel meets the requirement, send the first I/Q data to the combiner.

With reference to the second aspect or the first possible implementation of the second aspect, in a sixth possible implementation of the second aspect, the data processor specifically includes: a first selector, configured to: receive the first I/Q data from the separator; determine whether the channel quality of the microwave channel meets the requirement; and if the channel quality of the microwave channel does not meet the requirement, send the first I/Q data to a second modulator; or if the channel quality of the microwave channel meets the requirement, send the first I/Q data to the second selector; the second modulator, configured to: receive the first I/Q data from the first selector; modulate the first I/Q data to obtain the modulated first I/Q data; and send the modulated first I/Q data to the second selector; and the second selector, configured to: receive the first I/Q data from the first selector; receive the modulated first I/Q data from the second modulator; determine whether the channel quality of the microwave channel meets the requirement; and if the channel quality of the microwave channel does not meet the requirement, send the modulated first I/Q data to the combiner; or if the channel quality of the microwave channel meets the requirement, send the first I/Q data to the combiner.

According to a third aspect, a microwave receiving device is provided, including: a digital receiver, configured to receive a microwave air interface frame from a microwave air interface, and send the microwave air interface frame to a separator; the separator, configured to: receive the microwave air interface frame from the digital receiver; separate a modulated control word CW and first microwave data from the microwave air interface frame; and send the modulated CW to a first demodulator, and send the first microwave data to a data processor; the first demodulator, configured to: receive the modulated CW from the separator; demodulate the modulated CW to restore the CW; and send the CW to a combiner; the data processor, configured to: receive the first microwave data from the separator; copy the first microwave data to obtain two pieces of first microwave data; demodulate a first piece of first microwave data to obtain demodulated first microwave data; determine whether channel quality of a microwave channel meets a requirement; and if the channel quality of the microwave channel does not meet the requirement, send the demodulated first microwave data to the combiner; and the combiner, configured to: receive the CW from the first demodulator; receive the demodulated first microwave data from the data processor; and generate a common public radio interface CPRI frame based on the CW and the demodulated first microwave data.

According to a fourth aspect, a microwave receiving device is provided, including: a digital receiver, configured to receive a microwave air interface frame from a microwave air interface, and send the microwave air interface frame to a separator; the separator, configured to: receive the microwave air interface frame from the digital receiver; separate a modulated control word CW and first microwave data from the microwave air interface frame; and send the modulated CW to a first demodulator, and send the first microwave data to a data processor; the first demodulator, configured to: receive the modulated CW from the separator; demodulate the modulated CW to restore the CW; and send the CW to a combiner; the data processor, configured to: receive the first microwave data from the separator; determine whether channel quality of a microwave channel meets a requirement; and if the channel quality of the microwave channel does not meet the requirement, demodulate the first microwave data to obtain demodulated first microwave data; and send the demodulated first microwave data to the combiner; and the combiner, configured to: receive the CW from the first demodulator; receive the demodulated first microwave data from the data processor; and generate a common public radio interface CPRI frame based on the CW and the demodulated first microwave data.

With reference to the third aspect or the fourth aspect, in a first possible implementation of the third aspect or the fourth aspect, the data processor is further configured to: if the channel quality of the microwave channel meets the requirement, send the first microwave data to the combiner; and the combiner is further configured to receive the first microwave data from the data processor, and generate the CPRI frame based on the CW and the first microwave data.

With reference to the third aspect or the first possible implementation of the third aspect, or with reference to the fourth aspect or the first possible implementation of the fourth aspect, in a second possible implementation of the third aspect or the fourth aspect, the separator is further configured to separate a data frame from the microwave air interface frame. In this embodiment of the present invention, the microwave receiving device separates the data frame from the received microwave air interface frame, and sends the data frame to a BBU or an RRU connected to the microwave receiving device.

With reference to the third aspect or the first possible implementation of the third aspect, or with reference to the fourth aspect or the first possible implementation of the fourth aspect, in a third possible implementation of the third aspect or the fourth aspect, the separator is further configured to separate second microwave data from the microwave air interface frame, and send the second microwave data to the combiner, where the second microwave data is lower order modulation I/Q data; and the combiner is further configured to: if the channel quality of the microwave channel does not meet the requirement, generate the CPRI frame based on the CW, the demodulated first microwave data, and the second microwave data; or if the channel quality of the microwave channel meets the requirement, generate the CPRI frame based on the CW, the first microwave data, and the second microwave data.

With reference to the third aspect or the first possible implementation of the third aspect, in a fourth possible implementation of the third aspect, the data processor specifically includes: a splitter, configured to: receive the first microwave data from the separator; copy the first microwave data to obtain two pieces of first microwave data; and send a first piece of first microwave data to a second demodulator, and send a second piece of first microwave data to a selector; the second demodulator, configured to: receive the first microwave data from the splitter; demodulate the first microwave data to obtain demodulated first microwave data; and send the demodulated first microwave data to the selector; and the selector, configured to: receive the first microwave data from the splitter; receive the demodulated first microwave data from the second demodulator; determine whether the channel quality of the microwave channel meets the requirement; and if the channel quality of the microwave channel does not meet the requirement, send the demodulated first microwave data to the combiner; or if the channel quality of the microwave channel meets the requirement, send the first microwave data to the combiner.

With reference to the fourth aspect or the first possible implementation of the fourth aspect, in a fourth possible implementation of the fourth aspect, the data processor specifically includes: a first selector, configured to: receive the first microwave data from the separator; determine whether the channel quality of the microwave channel meets the requirement; and if the channel quality of the microwave channel does not meet the requirement, send the first microwave data to a second demodulator; or if the channel quality of the microwave channel meets the requirement, send the first microwave data to a second selector; the second demodulator, configured to: receive the first microwave data from the splitter; demodulate the first microwave data to obtain the demodulated first microwave data; and send the demodulated first microwave data to the second selector; and the second selector, configured to: receive the first microwave data from the first selector; receive the demodulated first microwave data from the second demodulator; determine whether the channel quality of the microwave channel meets the requirement; and if the channel quality of the microwave channel does not meet the requirement, send the demodulated first microwave data to the combiner; or if the channel quality of the microwave channel meets the requirement, send the first microwave data to the combiner.

According to a fifth aspect, a data sending method is provided, including: receiving a common public radio interface CPRI frame, and obtaining a control word CW and antenna-carrier I/Q data from the CPRI frame, where the antenna-carrier I/Q data includes first I/Q data; modulating the CW to obtain a modulated CW; copying the first I/Q data to obtain two pieces of first I/Q data, and modulating a first piece of first I/Q data to obtain modulated first I/Q data; determining whether channel quality of a microwave channel meets a requirement; and if the channel quality of the microwave channel does not meet the requirement, generating a first microwave air interface frame based on the modulated first I/Q data and the modulated CW, and sending the first microwave air interface frame by using the microwave channel.

According to a sixth aspect, a data sending method is provided, including: receiving a common public radio interface CPRI frame, and obtaining a control word CW and antenna-carrier I/Q data from the CPRI frame, where the antenna-carrier I/Q data includes first I/Q data; modulating the CW to obtain a modulated CW; determining whether channel quality of a microwave channel meets a requirement; and if the channel quality of the microwave channel does not meet the requirement, modulating the first I/Q data to obtain modulated first I/Q data, generating a first microwave air interface frame based on the modulated first I/Q data and the modulated CW, and sending the first microwave air interface frame by using the microwave channel.

In this embodiment of the present invention, the CW and the antenna-carrier I/Q data in the CPRI frame are separately processed. If the channel quality of the microwave channel does not meet the requirement, the first microwave air interface frame is generated based on the modulated first I/Q data and the modulated CW, so that a transmission distance requirement for a microwave system can be met without a need to reserve a large fade margin.

With reference to the fifth aspect or the sixth aspect, in a first possible implementation of the fifth aspect or the sixth aspect, after the determining whether channel quality of a microwave channel meets a requirement, the method further includes: if the channel quality of the microwave channel meets the requirement, generating a second microwave air interface frame based on the first I/Q data and the modulated CW, and sending the second microwave air interface frame by using the microwave channel.

In this embodiment of the present invention, if the channel quality of the microwave channel meets the requirement, the first I/Q data is transmitted based on an original modulation format, so that spectrum utilization loss is further reduced.

With reference to the fifth aspect or the first possible implementation of the fifth aspect, or with reference to the sixth aspect or the first possible implementation of the sixth aspect, in a second possible implementation of the fifth aspect or the sixth aspect, before the modulating the CW, the method further includes: receiving a data frame; the generating a first microwave air interface frame based on the modulated first I/Q data and the modulated CW specifically includes: generating the first microwave air interface frame based on the modulated first I/Q data, the modulated CW, and the data frame; and the generating a second microwave air interface frame based on the first I/Q data and the modulated CW specifically includes: generating the second microwave air interface frame based on the first I/Q data, the modulated CW, and the data frame.

With reference to the second possible implementation of the fifth aspect or the sixth aspect, in a third possible implementation of the fifth aspect or the sixth aspect, the data frame and the CPRI frame jointly occupy bandwidth of the microwave channel, and after the determining whether channel quality of a microwave channel meets a requirement, the method further includes: if the channel quality of the microwave channel meets the requirement, occupying, by the data frame, first bandwidth; or if the channel quality of the microwave channel does not meet the requirement, changing bandwidth occupied by the data frame into second bandwidth, where the second bandwidth is less than the first bandwidth, and remaining bandwidth is used for CPRI frame transmission.

With reference to the fifth aspect or the first possible implementation of the fifth aspect, or with reference to the sixth aspect or the first possible implementation of the sixth aspect, in a fourth possible implementation of the fifth aspect or the sixth aspect, the determining whether channel quality of a microwave channel meets a requirement specifically includes: determining whether an error vector magnitude EVM of the microwave channel is less than a maximum EVM required for the first I/Q data; and if the EVM of the microwave channel is less than the maximum EVM required for the first I/Q data, considering that the channel quality of the microwave channel meets the requirement; otherwise, considering that the channel quality of the microwave channel does not meet the requirement.

With reference to the fifth aspect or the first possible implementation of the fifth aspect, or with reference to the sixth aspect or the first possible implementation of the sixth aspect, in a fifth possible implementation of the fifth aspect or the sixth aspect, the first I/Q data is higher order modulation I/Q data, and the antenna-carrier I/Q data further includes second I/Q data, where the second I/Q data is lower order modulation I/Q data; the generating a first microwave air interface frame based on the modulated first I/Q data and the modulated CW specifically includes: generating the first microwave air interface frame based on the modulated first I/Q data, the modulated CW, and the second I/Q data; and the generating a second microwave air interface frame based on the first I/Q data and the modulated CW specifically includes: generating the second microwave air interface frame based on the first I/Q data, the modulated CW, and the second I/Q data.

According to a seventh aspect, a data receiving method is provided, including: receiving a microwave air interface frame from a microwave air interface, and obtaining a modulated control word CW and first microwave data from the microwave air interface frame; demodulating the modulated CW to obtain a CW; copying the first microwave data to obtain two pieces of first microwave data, and demodulating a first piece of first microwave data to obtain demodulated first microwave data; determining whether channel quality of a microwave channel meets a requirement; and if the channel quality of the microwave channel does not meet the requirement, generating a common public radio interface CPRI frame based on the CW and the demodulated first microwave data.

According to an eighth aspect, a data receiving method is provided, including: receiving a microwave air interface frame from a microwave air interface, and obtaining a modulated control word CW and first microwave data from the microwave air interface frame; demodulating the modulated CW to obtain a CW; determining whether channel quality of a microwave channel meets a requirement; and if the channel quality of the microwave channel does not meet the requirement, demodulating the first microwave data to obtain demodulated first microwave data, and generating a common public radio interface CPRI frame based on the CW and the demodulated first microwave data.

With reference to the seventh aspect or the eighth aspect, in a first possible implementation of the seventh aspect or the eighth aspect, after the determining whether channel quality of a microwave channel meets a requirement, the method further includes: if the channel quality of the microwave channel meets the requirement, generating the CPRI frame based on the CW and the first microwave data.

With reference to the seventh aspect or the first possible implementation of the seventh aspect, or with reference to the eighth aspect or the first possible implementation of the eighth aspect, in a second possible implementation of the seventh aspect or the eighth aspect, after the receiving a microwave air interface frame from a microwave air interface, the method further includes: further obtaining a data frame from the microwave air interface frame.

With reference to the seventh aspect or the first possible implementation of the seventh aspect, or with reference to the eighth aspect or the first possible implementation of the eighth aspect, in a third possible implementation of the seventh aspect or the eighth aspect, the determining whether channel quality of a microwave channel meets a requirement specifically includes: determining whether an error vector magnitude EVM of the microwave channel is less than a maximum EVM required for the first I/Q data; and if the EVM of the microwave channel is less than the maximum EVM required for the first I/Q data, considering that the channel quality of the microwave channel meets the requirement; otherwise, considering that the channel quality of the microwave channel does not meet the requirement.

With reference to the seventh aspect or the first possible implementation of the seventh aspect, or with reference to the eighth aspect or the first possible implementation of the eighth aspect, in a fourth possible implementation of the seventh aspect or the eighth aspect, after the receiving a microwave air interface frame from a microwave air interface, the method further includes: obtaining second microwave data from the microwave air interface frame, where the second microwave data is lower order modulation I/Q data; the generating a common public radio interface CPRI frame based on the CW and the demodulated first microwave data specifically includes: generating the CPRI frame based on the CW, the demodulated first microwave data, and the second microwave data; and the generating the CPRI frame based on the CW and the first microwave data specifically includes: generating the CPRI frame based on the CW, the first microwave data, and the second microwave data.

According to a ninth aspect, a data transmission system is provided, including the microwave sending device according to any one of the first aspect and the possible implementations of the first aspect, or any one of the second aspect and the possible implementations of the second aspect, and the microwave receiving device according to any one of the third aspect and the optional manners of the third aspect, or any one of the fourth aspect and the optional manners of the fourth aspect.

In the embodiments of the present invention, the CW and the antenna-carrier I/Q data in the CPRI frame are separately processed. If the channel quality of the microwave channel does not meet the requirement, the first microwave air interface frame is generated based on the modulated first I/Q data and the modulated CW, so that a transmission distance requirement for a microwave system can be met without a need to reserve a large fade margin.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of a CPRI protocol stack according to an embodiment of the present invention;
FIG. 2 is a schematic structural diagram of a CPRI basic frame according to an embodiment of the present invention;
FIG. 3 is an architectural diagram of a system to which an embodiment of the present invention is applied according to the present invention;
FIG. 4 is a flowchart of a data sending method according to an embodiment of the present invention;
FIG. 5 is a flowchart of a data sending method according to another embodiment of the present invention;
FIG. 6 is a flowchart of a data receiving method according to another embodiment of the present invention;
FIG. 7 is a flowchart of a data receiving method according to another embodiment of the present invention;
FIG. 8 is a schematic diagram of composition of a microwave sending device according to another embodiment of the present invention;
FIG. 9 is a schematic diagram of composition of a data processor in a microwave sending device according to another embodiment of the present invention;
FIG. 10 is a schematic diagram of composition of a microwave sending device according to another embodiment of the present invention;
FIG. 11 is a schematic diagram of composition of a data processor in a microwave sending device according to another embodiment of the present invention;
FIG. 12 is a schematic diagram of composition of a microwave receiving device according to another embodiment of the present invention;
FIG. 13 is a schematic diagram of composition of a data processor in a microwave receiving device according to another embodiment of the present invention;
FIG. 14 is a schematic diagram of composition of a microwave receiving device according to another embodiment of the present invention; and
FIG. 15 is a schematic diagram of composition of a data processor in a microwave receiving device according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

In the following description, specific details such as a particular system structure, an interface, and a technology are set forth in an illustrative but not a restrictive sense to make a thorough understanding of the present invention.

However, a person skilled in the art should know that the present invention may be implemented in other embodiments without these specific details. In other cases, detailed descriptions of well-known apparatuses, circuits, and methods are omitted, so that the present invention is described without being obscured by unnecessary details.

The ordinal numbers such as "first" and "second" mentioned in the embodiments of the present invention shall only serve the purpose of differentiation unless the numbers definitely indicate a sequence according to the context.

As is known to all, a core concept of a structure of a distributed base station is that a BBU and an RRU in a conventional macro base station are separated, and the BBU and the RRU are connected by using an optical fiber or a cable. Data transmitted between the BBU and the RRU may be referred to as digital fronthaul data (the digital fronthaul data may include common information and radio signal information). In other words, the digital fronthaul data may be bidirectionally transmitted between the BBU and the RRU by using the optical fiber or the cable. In addition, with development of radio access technologies, a transmission rate of the digital fronthaul data becomes increasingly high and may be higher in the future. Featuring high bandwidth and a high rate, the optical fiber is usually used in the industry to transmit the digital fronthaul data.

The common information and the radio signal information may constitute the digital fronthaul data according to a CPRI protocol. In this case, the digital fronthaul data is referred to as a CPRI frame.

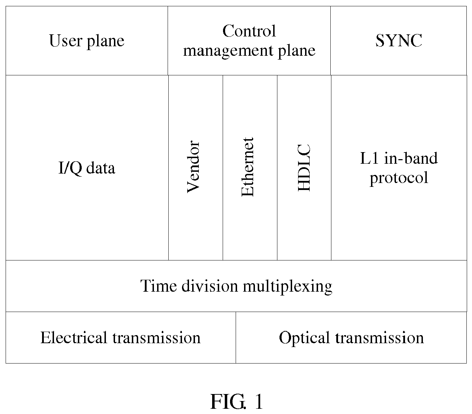

In a CPRI specification, a CPRI protocol stack may be divided into three planes: a user plane (UP), a control management plane (C&M Plane), and a synchronous plane (SYNC). The user plane is mainly used to transmit antenna-carrier I/Q data (referring to I/Q data shown in FIG. 1). The control management plane is mainly used to transmit control management data (referring to vendor-specific data, Ethernet data, and high-level data link control (HDLC) data shown in FIG. 1). The synchronous plane is mainly used to transmit synchronization data and timing data (referring to L1 in-band protocol data shown in FIG. 1). In addition, the data may be transmitted through time division multiplexing (TDM), and the transmission may be classified into electrical transmission and optical transmission based on different transmission mediums.

The CPRI frame has a specific frame structure. A period of a CPRI basic frame is 1/3.84 MHz = 260.416667 ns. One basic frame includes 16 words (W). A first word is a control word CW, and is used for control management plane data transmission and synchronous plane data transmission. A second word to a sixteenth word are data words, and are used for user plane data transmission. User plane data is mapped to a basic frame on a per-AxC (antenna-carrier) basis. One AxC includes I/Q sampling data of one carrier on one antenna, that is, antenna-carrier I/Q data. One basic frame may include a plurality of AxCs. Antenna-carrier I/Q data carried in all AxCs is modulated, and may not be modulated by using a same modulation format.

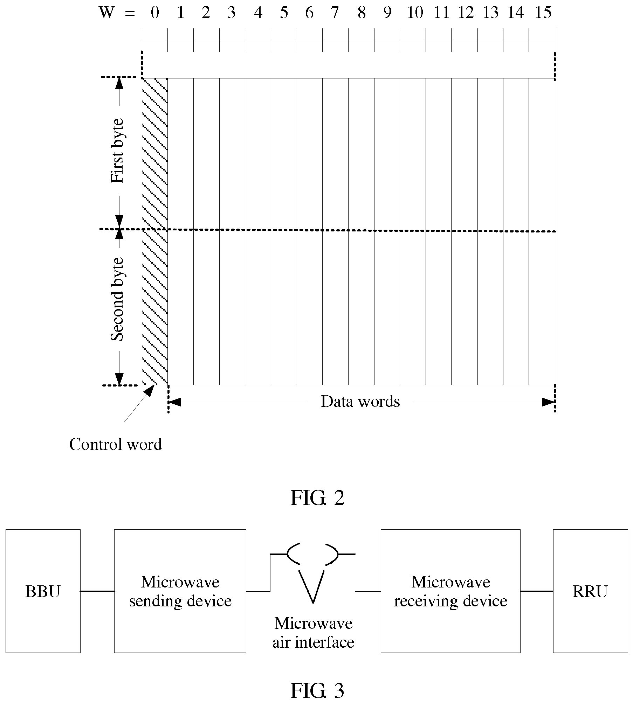

A rate of a CPRI link is specified in the CPRI protocol. The rate has been increased from 614.4 Mbit/s to 12165.12 Mbit/s. CPRI links at all rates are corresponding to a same CPRI frame structure, but corresponding basic frames have different word lengths. For example, FIG. 2 is a schematic structural diagram of a CPRI basic frame at a link rate of 1228.8 Mbit/s. A period of the CPRI basic frame is 1/3.84 MHz. Each word includes two bytes.

The CPRI frame is usually transmitted by using an ROR/AROF system, and this achieves high spectrum utilization. Specifically, antenna-carrier I/Q data in the CPRI frame is digital sampling data of a baseband I/Q signal in a wireless carrier signal transmitted or received by an antenna, and includes sampling information of data having different modulation formats. In the ROR/AROF system, the antenna-carrier I/Q data can be transmitted on a microwave channel based on an original modulation format, so that spectrum utilization is improved. However, the microwave channel changes with weather. Therefore, an EVM of the microwave channel may become large because channel quality becomes poor. Consequently, higher order modulation data in the antenna-carrier I/Q data cannot be transmitted in a microwave system.

An existing technical solution is to identify a highest order modulation format used for the antenna-carrier I/Q data in the CPRI frame, and reserve a fade margin for an EVM requirement of the highest order modulation format with reference to a poorest microwave channel state. However, a transmit signal needs to have a quite high signal-to-noise ratio because of a relatively large fade margin. Consequently, the transmit signal with the quite high signal-to-noise ratio can be transmitted only for a relatively short distance, and a microwave transmission distance requirement cannot be met.

For ease of understanding by a person skilled in the art, the present invention describes specific implementation processes of the technical solutions provided in the present invention by using the following embodiments.

As shown in FIG. 3, an embodiment of the present invention provides an architectural diagram of a system to which a method provided in an embodiment of the present invention is applied. The system may include a microwave device, a BBU, and an RRU. The microwave device is located between the BBU and the RRU. Specifically, the microwave device may include a microwave sending device and a microwave receiving device. In this embodiment of the present invention, locations of the microwave sending device and the microwave receiving device may be interchanged. For ease of description, it is assumed that, as shown in FIG. 3, a microwave device connected to the BBU is the microwave sending device, and a microwave device connected to the RRU is referred to as the microwave receiving device.

In the system architecture shown in FIG. 3, in a possible implementation, the microwave sending device may receive a CPRI frame from the BBU, convert the received CPRI frame into a microwave radio frequency signal, and then send the microwave radio frequency signal to the microwave receiving device by using a microwave air interface. In this case, the microwave receiving device may receive the microwave radio frequency signal from the microwave air interface, restore the CPRI frame based on the received microwave radio frequency signal, and then send the CPRI frame to the RRU. In addition, alternatively, the microwave device may be integrated into the BBU and/or the RRU. Correspondingly, in this implementation, when the microwave receiving device is integrated into the RRU, the microwave receiving device may directly transmit obtained antenna-carrier I/Q data to a radio frequency sending unit of the RRU, and send an obtained CW to a control management unit of the RRU, without performing CPRI frame re-encapsulation.

For ease of understanding by a person skilled in the art, a data sending method and a data receiving method provided in the embodiments of the present invention are applicable to the foregoing two possible implementations. This is not limited in the present invention.

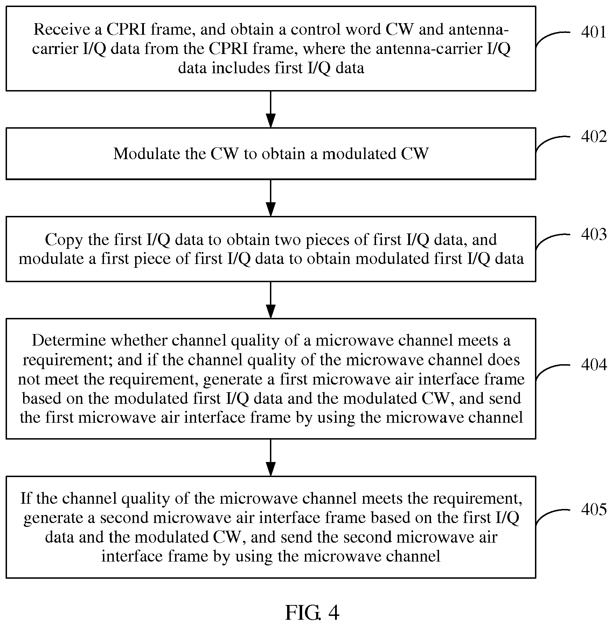

An embodiment of the present invention provides a data sending method. As shown in FIG. 4, the method may include the following steps.

401. Receive a CPRI frame, and obtain a CW and antenna-carrier I/Q data from the CPRI frame, where the antenna-carrier I/Q data includes first I/Q data.

A microwave sending device may receive the CPRI frame from a BBU or an RRU connected to the microwave sending device, and process (for example, parse) the CPRI frame, to obtain the CW and the antenna-carrier I/Q data from the CPRI frame. The CW is mainly used to implement functions such as control, management, timing, and synchronization. The antenna-carrier I/Q data is digital sampling data of a baseband I/Q signal in a wireless carrier signal transmitted or received by an antenna, and includes sampling information of data having different modulation formats, for example, sampling information of 256 Quadrature Amplitude Modulation (QAM) data and sampling information of 64QAM data.

402. Modulate the CW to obtain a modulated CW.

The CW may be sampling of modulated information or sampling of unmodulated information. This is not limited in this embodiment of the present invention. Because the CW has a relatively high bit error rate requirement, the separated CW needs to be modulated according to a preset modulation scheme, to obtain the modulated CW. Preferably, the preset modulation scheme is QAM.

403. Copy the first I/Q data to obtain two pieces of first I/Q data, and modulate a first piece of first I/Q data to obtain modulated first I/Q data.

404. Determine whether channel quality of a microwave channel meets a requirement; and if the channel quality of the microwave channel does not meet the requirement, generate a first microwave air interface frame based on the modulated first I/Q data and the modulated CW, and send the first microwave air interface frame by using the microwave channel.

The microwave channel is a channel between two microwave devices. The microwave sending device may send the first I/Q data based on an original modulation format. However, an EVM of the microwave channel may become large because of instability of the microwave channel. Consequently, the first I/Q data cannot be sent based on the original modulation format in a microwave system. Therefore, to ensure normal transmission of the antenna-carrier I/Q data, if the channel quality of the microwave channel does not meet the requirement, the first I/Q data needs to be transmitted based on a lower order modulation format, to reduce a requirement for the EVM of the microwave channel. Preferably, the preset modulation scheme is the QAM.

Optionally, the channel quality of the microwave channel is measured by using the EVM or a signal-to-noise ratio (SNR) of the microwave channel.

Specifically, a method for determining whether the channel quality of the microwave channel meets the requirement may be as follows: The EVM of the microwave channel is monitored; and if the EVM of the microwave channel is less than a maximum EVM required for the first I/Q data, it is considered that the channel quality of the microwave channel meets the requirement; otherwise, it is considered that the channel quality of the microwave channel does not meet the requirement.

The EVM is an error vector magnitude. An error vector includes an amplitude vector and a phase vector, and is a vector difference between an ideal error-free reference signal and an actually transmitted signal at a specific moment. The error vector can comprehensively measure an amplitude error and a phase error of a modulated signal. The EVM of the microwave channel is an EVM that can be measured when any signal is transmitted on a current microwave channel. If the channel quality of the microwave channel changes, the EVM of the microwave channel changes accordingly.

It should be understood that bidirectional transmission is performed between a BBU and an RRU. There is both a microwave sending device and a microwave receiving device at a BBU end or an RRU end. An EVM measured by a microwave receiving device may be directly transmitted to a local microwave sending device, to reduce a delay in measuring the EVM of the microwave channel.

It should be noted that the first I/Q data includes a plurality of types of data with different modulation formats. The 3GPP standard specifies maximum EVMs separately required for the data with the different modulation formats.

For example, in end-to-end communication in LTE, for 64QAM data, the EVM only needs to not exceed 8%, but for 256QAM data, the EVM needs to not exceed 4%.

Specifically, the EVM of the microwave channel may be further used to: if the channel quality of the microwave channel does not meet the requirement, determine a specific modulation format that needs to be used for the first I/Q data. For example, the 256QAM data is highest order modulation data in the first I/Q data. When it is detected that the EVM of the microwave channel is 3% (<4%), it is considered that the channel quality of the microwave channel meets the requirement, and the first I/Q data is transmitted based on an original modulation format; or when it is detected that the EVM of the microwave channel is 5% (>4% and <8%), it is considered that the channel quality of the microwave channel does not meet the requirement, and the first I/Q data is transmitted based on 64QAM; or when it is detected that the EVM of the microwave channel exceeds 8%, apparently, the channel quality of the microwave channel does not meet the requirement, and in this case, the first I/Q data can be transmitted based on a modulation format (for example, 16QAM) only with a lower order than the 64QAM.

Optionally, the microwave sending device may combine the modulated first I/Q data and the modulated CW through time division multiplexing to generate the first microwave air interface frame. For example, the microwave sending device may uniformly insert the modulated first I/Q data and the modulated CW into a payload area of the first microwave air interface frame, to encapsulate the first microwave air interface frame. In this case, the first microwave air interface frame may be transmitted on one microwave channel, so that the entire microwave system can become a single carrier system, reducing hardware complexity and costs.

In the first microwave air interface frame, both the modulated CW and the modulated first I/Q data are transmitted based on specific modulation formats used by the microwave sending device for the modulated CW and the modulated first I/Q data.

Further, processing such as shaping filtering, digital-to-analog conversion, and up-conversion is performed on the first microwave air interface frame to generate a microwave radio frequency signal. Then the microwave radio frequency signal is sent by using a microwave air interface.

Optionally, in another embodiment, after the determining whether channel quality of a microwave channel meets a requirement, the method further includes:

405. If the channel quality of the microwave channel meets the requirement, generate a second microwave air interface frame based on the first I/Q data and the modulated CW, and send the second microwave air interface frame by using the microwave channel.

In the second microwave air interface frame, the modulated CW is transmitted based on a specific modulation format used by the microwave sending device for the modulated CW, and the first I/Q data is transmitted based on an original modulation format in the CPRI frame.

In this embodiment of the present invention, the CW and the antenna-carrier I/Q data in the CPRI frame are separately processed. A manner of processing the first I/Q data in the antenna-carrier I/Q data flexibly changes with the channel quality of the microwave channel, so that spectrum utilization loss is reduced, and a transmission distance requirement for the microwave system can be met without a need to reserve a large fade margin.

Optionally, in another embodiment, the first I/Q data is higher order modulation I/Q data. The antenna-carrier I/Q data further includes second I/Q data. The second I/Q data is lower order modulation I/Q data.

A specific manner of generating the first microwave air interface frame includes: generating the first microwave air interface frame based on the modulated first I/Q data, the modulated CW, and the second I/Q data. A specific manner of generating the second microwave air interface frame includes: generating the second microwave air interface frame based on the first I/Q data, the modulated CW, and the second I/Q data.

In this embodiment of the present invention, the antenna-carrier I/Q data is divided into the first I/Q data and the second I/Q data. It is determined, based on a change status of the channel quality of the microwave channel, whether the first I/Q data is to be transmitted based on the lower order modulation format, and no large fade margin needs to be reserved. In addition, only the first I/Q data is transmitted based on the lower order modulation format when the channel quality becomes poor, so that spectrum utilization loss in the microwave system is further reduced.

Optionally, in another embodiment, before the modulating first I/Q data, the method further includes: compressing the first I/Q data. In this embodiment of the present invention, bandwidth occupied by the modulated first I/Q data may be reduced, improving spectrum utilization.

Optionally, in another embodiment, first identification information is received, or the first identification information is extracted from the CW. The first I/Q data is identified according to the first identification information. The first identification information is used to indicate the first I/Q data.

It should be understood that the first identification information is provided by the BBU or the RRU connected to the microwave sending device. The first identification information may be written in the CW in the BBU or the RRU, or may be directly sent by the BBU or the RRU to the microwave sending device. This is not limited in this embodiment of the present invention.

Optionally, in another embodiment, before the modulating the CW, the method further includes: receiving a data frame.

The generating a first microwave air interface frame based on the modulated first I/Q data and the modulated CW specifically includes: generating the first microwave air interface frame based on the modulated first I/Q data, the modulated CW, and the data frame.

The generating a second microwave air interface frame based on the first I/Q data and the modulated CW specifically includes: generating the second microwave air interface frame based on the first I/Q data, the modulated CW, and the data frame.

The data frame is modulated data.

Optionally, in another embodiment, the data frame and the CPRI frame jointly occupy bandwidth of the microwave channel. After the determining whether channel quality of a microwave channel meets a requirement, the method further includes:

if the channel quality of the microwave channel meets the requirement, occupying, by the data frame, first bandwidth; or if the channel quality of the microwave channel does not meet the requirement, changing bandwidth occupied by the data frame into second bandwidth, where the second bandwidth is less than the first bandwidth, and remaining bandwidth is used for CPRI frame transmission.

In consideration that there is a specific standard for the bandwidth of the microwave channel, the CPRI frame may be unable to use the entire bandwidth of the microwave channel. Therefore, hybrid transmission may be performed on the data frame and the CPRI frame. If the channel quality of the microwave channel does not meet the requirement, the first I/Q data in the CPRI frame is transmitted based on the lower order modulation format. Consequently, higher bandwidth is occupied. Therefore, the bandwidth occupied by the data frame may be reduced, and surplus bandwidth is allocated to the CPRI frame, to ensure normal transmission of a hybrid service including the data frame and the CPRI frame.

Specifically, for example, a 60 MHz CPRI frame and a 140 MHz data frame are transmitted on a microwave channel with 200 MHz bandwidth. It is assumed that the CPRI frame uses a CPRI option 2. In the CPRI option 2, a specified transmission rate is 1.228 Gbps, and an 8B/10B encoding manner is used. Each CPRI basic frame includes one CW and 15 data words. The data words are obtained by mapping the antenna-carrier I/Q data. It is further assumed that the first I/Q data occupies 10% of the antenna-carrier I/Q data, and a compression ratio of the microwave system is 3:1. Therefore, a bit rate of the first I/Q data is:

$$1.228 \text{ Gbps} * 0.8 * (15/16) * 10\% = 92.1 \text{ Mbps}$$

If the first I/Q data is modulated by using the 64QAM, the modulated first I/Q data occupies additional bandwidth of approximately 15.35 MHz. Therefore, if the channel quality of the microwave channel does not meet the requirement, bandwidth occupied by the CPRI frame increases to approximately 75.35 MHz, and the bandwidth occupied by the data frame decreases to approximately 124.65 MHz.

If the first I/Q data is modulated by using the 16QAM, and other conditions do not change, the modulated first I/Q data occupies additional bandwidth of approximately 23.025 MHz. Therefore, if the channel quality of the microwave channel does not meet the requirement, bandwidth occupied by the CPRI frame increases to approximately 83.025 MHz, and the bandwidth occupied by the data frame decreases to approximately 116.975 MHz.

Optionally, in another embodiment, identification information is written in the first microwave air interface frame. The identification information is used to indicate the first I/Q data and the modulated first I/Q data, and record a specific modulation format used for the modulated first I/Q data.

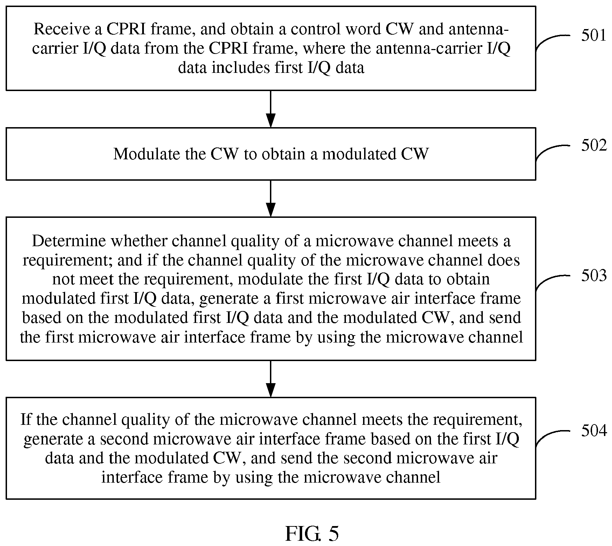

Another embodiment of the present invention provides a data sending method. As shown in FIG. 5, the method may include the following steps.

501. Receive a CPRI frame, and obtain a CW and antenna-carrier I/Q data from the CPRI frame, where the antenna-carrier I/Q data includes first I/Q data.

502. Modulate the CW to obtain a modulated CW.

503. Determine whether channel quality of a microwave channel meets a requirement; and if the channel quality of the microwave channel does not meet the requirement, modulate the first I/Q data to obtain modulated first I/Q data, generate a first microwave air interface frame based on the modulated first I/Q data and the modulated CW, and send the first microwave air interface frame by using the microwave channel.

504. If the channel quality of the microwave channel meets the requirement, generate a second microwave air interface frame based on the first I/Q data and the modulated CW, and send the second microwave air interface frame by using the microwave channel.

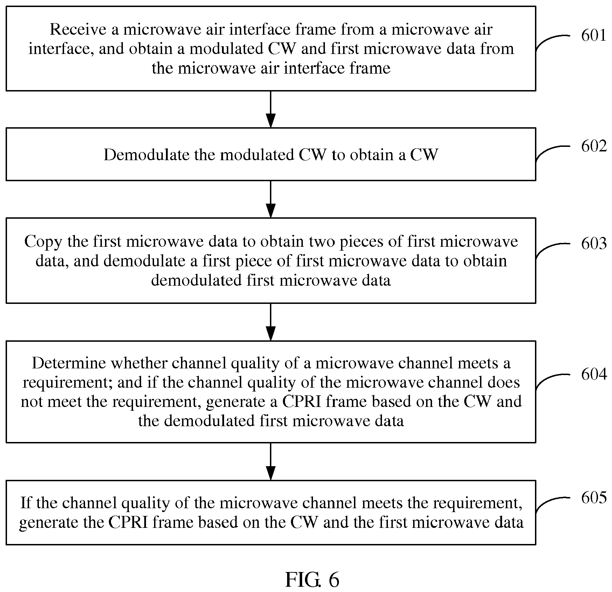

Another embodiment of the present invention provides a data receiving method. As shown in FIG. 6, the method may include the following steps.

601. Receive a microwave air interface frame from a microwave air interface, and obtain a modulated CW and first microwave data from the microwave air interface frame.

A microwave receiving device may receive a microwave radio frequency signal from the microwave air interface. After receiving the microwave radio frequency signal, the microwave receiving device performs processing such as down-conversion, analog-to-digital conversion, and filtering on the microwave radio frequency signal, to obtain the microwave air interface frame.

After the microwave air interface frame is obtained, the microwave air interface frame may be parsed, to extract the modulated CW and the first microwave data.

602. Demodulate the modulated CW to obtain a CW.

603. Copy the first microwave data to obtain two pieces of first microwave data, and demodulate a first piece of first microwave data to obtain demodulated first microwave data.

Optionally, in another embodiment, before the demodulating a first piece of first microwave data, the method further includes: determining a demodulation scheme that needs to be used for the first microwave data.

The microwave air interface frame includes identification information that is written in advance in the microwave air interface frame. The identification information is used to indicate the first microwave data and the specific demodulation scheme that needs to be used for the first microwave data. The microwave receiving device may extract the identification information from the microwave air interface frame, identify the first microwave data according to the extracted identification information, and determine the demodulation scheme that needs to be used for the first microwave data.

604. Determine whether channel quality of a microwave channel meets a requirement; and if the channel quality of the microwave channel does not meet the requirement, generate a CPRI frame based on the CW and the demodulated first microwave data.

If the channel quality of the microwave channel does not meet the requirement, the first microwave data is modulated first I/Q data. Therefore, the demodulated first microwave data is first I/Q data. The microwave receiving device re-encapsulates the first I/Q data and the CW according to a CPRI protocol, to generate the CPRI frame, and sends the generated CPRI frame to a BBU or an RRU connected to the microwave receiving device.

Optionally, in another embodiment, the channel quality of the microwave channel is measured by using an EVM or an SNR of the microwave channel.

Specifically, a method for determining whether the channel quality of the microwave channel meets the requirement may be as follows: The EVM of the microwave channel is monitored; and if the EVM of the microwave channel is less than a maximum EVM required for the first I/Q data, it is considered that the channel quality of the microwave channel meets the requirement; otherwise, it is considered that the channel quality of the microwave channel does not meet the requirement.

As described above, the EVM of the microwave channel may be used to determine whether the channel quality of the microwave channel meets the requirement, and in addition, the EVM may also be used to determine the specific demodulation scheme that needs to be used for the first microwave data.

Specifically, it is determined that the EVM of the microwave channel falls between maximum EVMs required for which two modulation formats whose orders are adjacent to each other. The first microwave data is demodulated based on a demodulation scheme corresponding to a modulation format whose order is lower in the two modulation formats.

In the data receiving method provided in this embodiment of the present invention, a microwave sending device separately processes the CW and the first I/Q data in the CPRI frame. If the channel quality of the microwave channel does not meet the requirement, the microwave sending device generates the CPRI frame based on the CW and the demodulated first microwave data, so that a transmission distance requirement for a microwave system can be met without a need to reserve a large fade margin.

Optionally, in another embodiment, after the determining whether channel quality of a microwave channel meets a requirement, the method further includes:

605. If the channel quality of the microwave channel meets the requirement, generate the CPRI frame based on the CW and the first microwave data, where if the channel quality of the microwave channel meets the requirement, the first microwave data is first I/Q data.

Optionally, in another embodiment, after the receiving a microwave air interface frame from a microwave air interface, the method further includes: obtaining second microwave data from the microwave air interface frame, where the second microwave data is lower order modulation I/Q data.

If the channel quality of the microwave channel does not meet the requirement, the CPRI frame is generated based on the CW, the demodulated first microwave data, and the second microwave data. Alternatively, if the channel quality of the microwave channel meets the requirement, the CPRI frame is generated based on the CW, the first microwave data, and the second microwave data.

Optionally, in another embodiment, after the demodulating first microwave data to obtain demodulated first microwave data, the method further includes: decompressing the demodulated first microwave data.

Optionally, in another embodiment, after the receiving a microwave air interface frame from a microwave air interface, the method further includes: further obtaining a data frame from the microwave air interface frame.

Specifically, after the data frame is obtained, the data frame is sent to the BBU or the RRU connected to the microwave receiving device, where the data frame is modulated data.

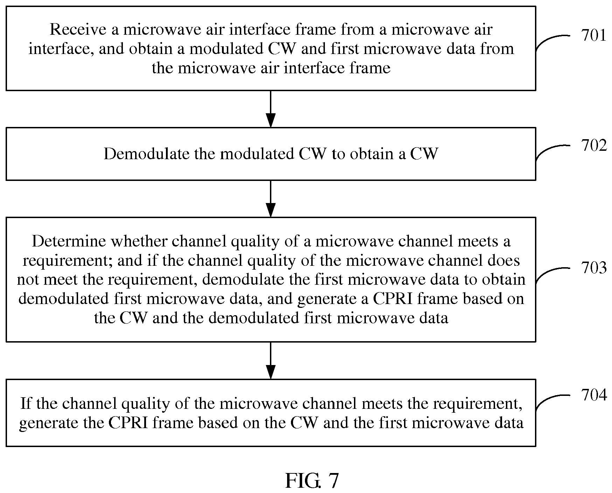

Another embodiment of the present invention provides a data receiving method. As shown in FIG. 7, the method may include the following steps.

701. Receive a microwave air interface frame from a microwave air interface, and obtain a modulated control word CW and first microwave data from the microwave air interface frame.

702. Demodulate the modulated CW to obtain a CW.

703. Determine whether channel quality of a microwave channel meets a requirement; and if the channel quality of the microwave channel does not meet the requirement, demodulate the first microwave data to obtain demodulated first microwave data, and generate a CPRI frame based on the CW and the demodulated first microwave data.

704. If the channel quality of the microwave channel meets the requirement, generate the CPRI frame based on the CW and the first microwave data.

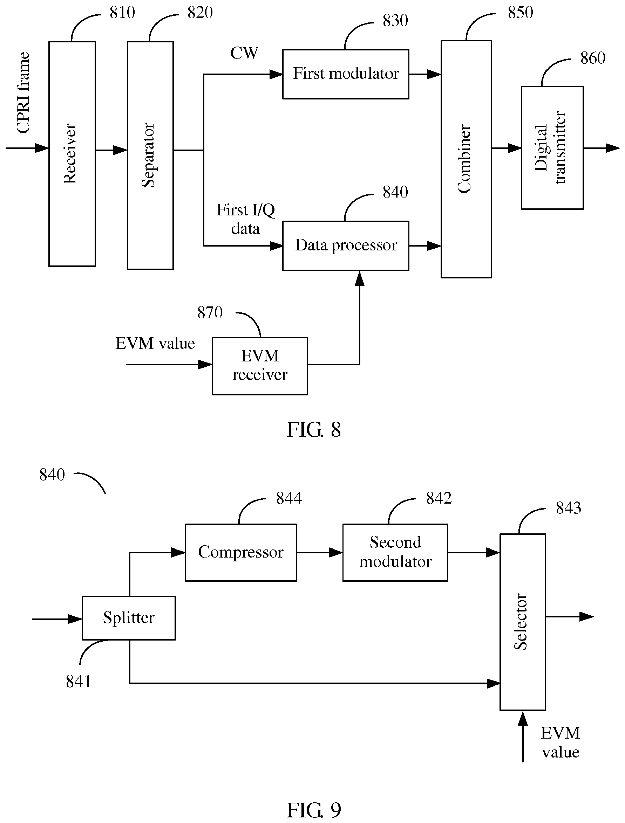

Another embodiment of the present invention provides a microwave sending device 800. As shown in FIG. 8, the microwave sending device 800 may include a receiver 810, a separator 820, a first modulator 830, a data processor 840, a combiner 850, and a digital transmitter 860.

The receiver 810 is configured to receive a CPRI frame, and send the CPRI frame to the separator 820.

The separator 820 is configured to: receive the CPRI frame from the receiver 810; separate a CW and antenna-carrier I/Q data from the CPRI frame, where the antenna-carrier I/Q data includes first I/Q data; and send the CW to the first modulator 830, and send the first I/Q data to the data processor 840.

The first modulator 830 is configured to: receive the CW from the separator 820; modulate the CW to obtain a modulated CW; and send the modulated CW to the combiner 850.

The data processor 840 is configured to: receive the first I/Q data from the separator 820; copy the first I/Q data to obtain two pieces of first I/Q data, and modulate a first piece of first I/Q data to obtain modulated first I/Q data; determine whether channel quality of a microwave channel meets a requirement; and if the channel quality of the microwave channel does not meet the requirement, send the modulated first I/Q data to the combiner 850.

The combiner 850 is configured to: receive the modulated CW from the first modulator 830; receive the modulated first I/Q data from the data processor 840; generate a first microwave air interface frame based on the modulated first I/Q data and the modulated CW; and send the first microwave air interface frame to the digital transmitter 860.

The digital transmitter 860 is configured to receive the first microwave air interface frame from the combiner 850, and send the first microwave air interface frame by using the microwave channel.

The microwave channel is a channel between two microwave devices. The microwave sending device 800 may send the first I/Q data based on an original modulation format. However, an EVM of the microwave channel may become large because of instability of the microwave channel. Consequently, the first I/Q data cannot be sent based on the original modulation format in a microwave system. Therefore, to ensure normal transmission of the antenna-carrier I/Q data, if the channel quality of the microwave channel does not meet the requirement, the first I/Q data needs to be transmitted based on a lower order modulation format, to reduce a requirement for the EVM of the microwave channel. Preferably, the modulation format is QAM.

In the first microwave air interface frame, the modulated CW is transmitted based on a specific modulation format used by the first modulator 830 for the modulated CW, and the modulated first I/Q data is transmitted based on a modulation format used by the processor 840 for the modulated first I/Q data.

The combiner 850 may combine the modulated first I/Q data and the modulated CW through time division multiplexing to generate the first microwave air interface frame. For example, the combiner 850 may uniformly insert the modulated first I/Q data and the modulated CW into a payload area of the first microwave air interface frame, to encapsulate the first microwave air interface frame. In this case, the first microwave air interface frame may be transmitted on one microwave channel, so that the entire microwave system can become a single carrier system, reducing hardware complexity and costs.

Further, the digital transmitter 860 may perform processing such as shaping filtering, digital-to-analog conversion, and up-conversion on the first microwave air interface frame to generate a microwave radio frequency signal, and then send the microwave radio frequency signal by using a microwave air interface.

In this embodiment of the present invention, the microwave sending device 800 separately processes the CW and the first I/Q data in the CPRI frame, so that a transmission distance requirement for the microwave system can be met without a need to reserve a large fade margin.

Optionally, in another embodiment, the data processor 840 is further configured to: if the channel quality of the microwave channel meets the requirement, send the first I/Q data to the combiner 850.

The combiner 850 is further configured to: receive the first I/Q data from the data processor 840; generate a second microwave air interface frame based on the first I/Q data and the modulated CW; and send the second microwave air interface frame to the digital transmitter 860.

The digital transmitter 860 is further configured to receive the second microwave air interface frame from the combiner 850, and send the second microwave air interface frame by using the microwave channel.

If the channel quality of the microwave channel meets the requirement, the first I/Q data is transmitted not based on a lower order modulation format, to reduce spectrum utilization loss in the microwave system. In this case, in the second microwave air interface frame, the modulated CW is transmitted based on the specific modulation format used by the first modulator 830 for the modulated CW, and the first I/Q data is transmitted based on an original modulation format in the CPRI frame.

Optionally, in another embodiment, the microwave sending device 800 further includes an EVM receiver 870, configured to receive an EVM of the microwave channel, and send the EVM of the microwave channel to the data processor 840. The data processor 840 is further configured to receive the EVM of the microwave channel from the EVM receiver 870, and determine whether the channel quality of the microwave channel meets the requirement.

Further, a method for determining, by the data processor 840, whether the channel quality of the microwave channel meets the requirement may be: determining whether the EVM of the microwave channel is less than a maximum EVM required for the first I/Q data; and if the EVM of the microwave channel is less than the maximum EVM required for the first I/Q data, considering that the channel quality of the microwave channel meets the requirement; otherwise, considering that the channel quality of the microwave channel does not meet the requirement.

It should be understood that bidirectional transmission is performed between a BBU and an RRU. There is both a microwave sending device and a microwave receiving device at a BBU end or an RRU end. The EVM that is of the microwave channel and that is received by the EVM receiver 870 in the microwave sending device may be sent by a local microwave receiving device, to reduce a delay in measuring the EVM of the microwave channel.

In addition to determining whether the channel quality of the microwave channel meets the requirement, the EVM of the microwave channel may be used to determine a specific modulation format that needs to be used for the first I/Q data. A determining manner is already described as an example in the foregoing embodiment. Details are not described herein again.

Optionally, in another embodiment, as shown in FIG. 9, the data processor 840 specifically includes:

a splitter 841, configured to: receive the first I/Q data from the separator 820; copy the first I/Q data to obtain two pieces of first I/Q data; and send a first piece of first I/Q data to a second modulator 842, and send a second piece of first I/Q data to a selector 843;
the second modulator 842, configured to: receive the first I/Q data from the splitter 841; modulate the first I/Q data to obtain modulated first I/Q data; and send the modulated first I/Q data to the selector 843; and
the selector 843, configured to: receive the first I/Q data from the splitter 841; receive the modulated first I/Q data from the second modulator 842; determine whether the channel quality of the microwave channel meets the requirement; and if the channel quality of the microwave channel does not meet the requirement, send the modulated first I/Q data to the combiner 850; or if the channel quality of the microwave channel meets the requirement, send the first I/Q data to the combiner 850.

Optionally, in another embodiment, as shown in FIG. 9, the data processor 840 further includes:

a compressor 844, configured to: receive the first I/Q data from the splitter 841; compress the first I/Q data; and send the compressed first I/Q data to the second modulator 842. Before the first I/Q data is modulated, the first I/Q data is compressed, to reduce bandwidth occupied by the modulated first I/Q data, and improve spectrum utilization.

Optionally, in another embodiment, the first I/Q data is higher order modulation I/Q data.

The separator 820 is further configured to separate second I/Q data from the CPRI frame, and send the second I/Q data to the combiner 850, where the second I/Q data is lower order modulation I/Q data.

The combiner 850 is further configured to: receive the second I/Q data from the separator 820; generate the first microwave air interface frame based on the modulated first I/Q data, the modulated CW, and the second I/Q data; and generate the second microwave air interface frame based on the first I/Q data, the modulated CW, and the second I/Q data.

In this embodiment of the present invention, the antenna-carrier I/Q data is divided into the first I/Q data and the second I/Q data. The data processor 840 selects a processing manner of the first I/Q data based on a change status of the channel quality of the microwave channel, and no large fade margin needs to be reserved. In addition, only the first I/Q data is transmitted based on the lower order modulation format when the channel becomes poor, so that spectrum utilization loss in the microwave system is further reduced.

Optionally, in another embodiment, the receiver 810 is further configured to receive first identification information, and send the first identification information to the separator 820. The separator 820 is further configured to: receive the first identification information from the receiver 810, or extract the first identification information from the CW, and identify the first I/Q data according to the first identification information, where the first identification information is used to indicate the first I/Q data.

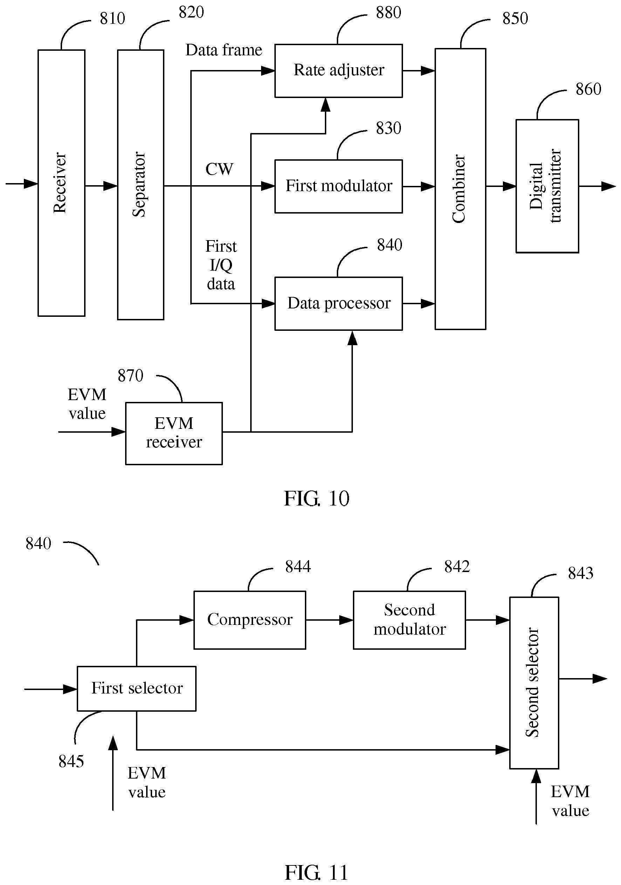

Optionally, in another embodiment, as shown in FIG. 10, the receiver 810 is further configured to receive a data frame, and send the data frame to the combiner 850. The combiner 850 is further configured to: receive the data frame from the receiver 810; and if the channel quality of the microwave channel does not meet the requirement, generate the first microwave air interface frame based on the modulated first I/Q data, the modulated CW, and the data frame; or if the channel quality of the microwave channel meets the requirement, generate the second microwave air interface frame based on the first I/Q data, the modulated CW, and the data frame, where the data frame is modulated data.

Specifically, the microwave sending device 800 further includes a rate adjuster 880, configured to: receive the data frame from the receiver 810, where the data frame and the CPRI frame jointly occupy bandwidth of the microwave channel; and if the channel quality of the microwave channel meets the requirement, keep the data frame occupying first bandwidth, and send the data frame to the combiner 850; or if the channel quality of the microwave channel does not meet the requirement, change the bandwidth occupied by the data frame into second bandwidth, and send the adjusted data frame to the combiner 850, where the second bandwidth is less than the first bandwidth.

In consideration that there is a specific standard for the bandwidth of the microwave channel, the CPRI frame may be unable to use the entire bandwidth of the microwave channel. Therefore, hybrid transmission may be performed on the data frame and the CPRI frame. If the channel quality of the microwave channel does not meet the requirement, the first I/Q data in the CPRI frame is transmitted based on the lower order modulation format. Consequently, higher bandwidth is occupied. Therefore, bandwidth occupied by the data frame may be reduced, and surplus bandwidth is allocated to the CPRI frame, to ensure normal transmission of a hybrid service including the data frame and the CPRI frame.

Optionally, in another embodiment, the EVM receiver 870 is further configured to receive an EVM of the microwave channel, and send the EVM of the microwave channel to the rate adjuster 880. The rate adjuster 880 is further configured to receive the EVM of the microwave channel from the EVM receiver 870, and determine whether the channel quality of the microwave channel meets the requirement. Specifically, it is determined whether the EVM of the microwave channel is less than a maximum EVM required for the first I/Q data. If the EVM of the microwave channel is less than the maximum EVM required for the first I/Q data, it is considered that the channel quality of the microwave channel meets the requirement; otherwise, it is considered that the channel quality of the microwave channel does not meet the requirement.

Optionally, in another embodiment, the data processor 840 is further configured to send identification information to the combiner 850. The combiner 850 is further configured to: receive the identification information from the data processor 840; and write the identification information in the first microwave air interface frame and the second microwave air interface frame, where the identification information is used to indicate the first I/Q data and the modulated first I/Q data, and record a specific modulation format used by the data processor 840 for the modulated first I/Q data.

Another embodiment of the present invention provides a microwave sending device. Components included in the device are the same as those in the foregoing embodiment. A data processor 840 is configured to: receive first I/Q data from a separator 810; determine whether channel quality of a microwave channel meets a requirement; and if the channel quality of the microwave channel does not meet the requirement, modulate the first I/Q data to obtain modulated first I/Q data, and send the modulated first I/Q data to a combiner 850. Functions of other components are consistent with those described in the foregoing embodiment. Details are not described in this embodiment of the present invention again.

Optionally, in another embodiment, the data processor 840 is further configured to: if the channel quality of the microwave channel meets the requirement, send the first I/Q data to the combiner 850. The combiner 850 is further configured to: receive the first I/Q data from the data processor 840; generate a second microwave air interface frame based on the first I/Q data and a modulated CW; and send the second microwave air interface frame to a digital transmitter 860. The digital transmitter 860 is further configured to receive the second microwave air interface frame from the combiner 850, and send the second microwave air interface frame by using the microwave channel.

Specifically, as shown in FIG. 11, the data processor 840 specifically includes:

a first selector 845, configured to: receive the first I/Q data from the separator 820; determine whether the channel quality of the microwave channel meets the requirement; and if the channel quality of the microwave channel does not meet the requirement, send the first I/Q data to a second modulator 842; or if the channel quality of the microwave channel meets the requirement, send the first I/Q data to a second selector 843;

the second modulator 842, configured to: receive the first I/Q data from the first selector 845; modulate the first I/Q data to obtain modulated first I/Q data; and send the modulated first I/Q data to the second selector 843; and

the second selector 843, configured to: receive the first I/Q data from the first selector 845; receive the modulated first I/Q data from the second modulator 842; determine whether the channel quality of the microwave channel meets the requirement; and if the channel quality of the microwave channel does not meet the requirement, send the modulated first I/Q data to the combiner 850; or if the channel quality of the microwave channel meets the requirement, send the first I/Q data to the combiner 850.

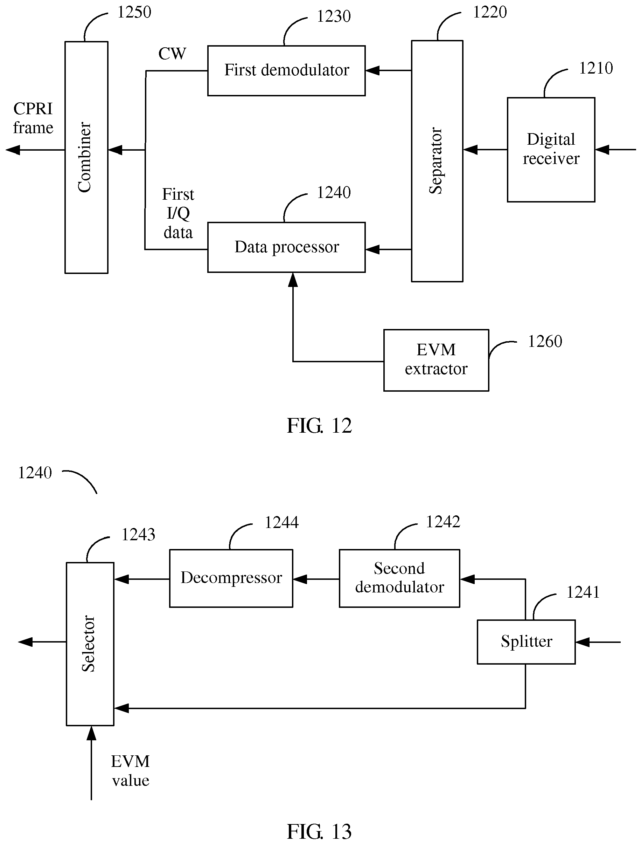

Another embodiment of the present invention provides a microwave receiving device 1200. As shown in FIG. 12, the microwave receiving device 1200 may include a digital receiver 1210, a separator 1220, a first demodulator 1230, a data processor 1240, and a combiner 1250.

The digital receiver 1210 is configured to receive a microwave air interface frame from a microwave air interface, and send the microwave air interface frame to the separator 1220.

The separator 1220 is configured to: receive the microwave air interface frame from the digital receiver 1210; separate a modulated CW and first microwave data from the microwave air interface frame; and respectively send the modulated CW and the first microwave data to the first demodulator 1230 and the data processor 1240.

The first demodulator 1230 is configured to: receive the modulated CW from the separator 1220; demodulate the modulated CW to restore a CW; and send the CW to the combiner 1250.

The data processor 1240 is configured to: receive the first microwave data from the separator 1220; copy the first microwave data to obtain two pieces of first microwave data; demodulate a first piece of first microwave data to obtain demodulated first microwave data; determine whether channel quality of a microwave channel meets a requirement; and if the channel quality of the microwave channel does not meet the requirement, send the demodulated first microwave data to the combiner 1250.

The combiner 1250 is configured to: receive the CW from the first demodulator 1230; receive the demodulated first microwave data from the data processor 1240; and generate a CPRI frame based on the CW and the demodulated first microwave data.

This embodiment of the present invention provides the microwave receiving device. A microwave sending device separately processes the CW and first I/Q data in the CPRI frame. If the channel quality of the microwave channel does not meet the requirement, the first I/Q data is transmitted based on a lower order modulation format, so that a transmission distance requirement for a microwave system can be met without a need to reserve a large fade margin.

Optionally, in another embodiment, the data processor 1240 is further configured to: if the channel quality of the microwave channel meets the requirement, send the first microwave data to the combiner 1250. The combiner 1250 is further configured to receive the first microwave data from the data processor 1240, and generate the CPRI frame based on the CW and the first microwave data.

Specifically, if the channel quality of the microwave channel does not meet the requirement, the first microwave data is modulated first I/Q data; or if the channel quality of the microwave channel meets the requirement, the first microwave data is the first I/Q data. After obtaining the first I/Q data and the CW, the combiner 1250 re-encapsulates the first I/Q data and the CW according to a CPRI protocol, to generate the CPRI frame, and sends the generated CPRI frame to a BBU or an RRU connected to the microwave receiving device.

Optionally, in another embodiment, the separator 1220 is further configured to obtain second microwave data from the microwave air interface frame, and send the second microwave data to the combiner 1250, where the second microwave data is lower order modulation I/Q data.

The combiner 1250 is further configured to: if the channel quality of the microwave channel does not meet the requirement, generate the CPRI frame based on the CW, the demodulated first microwave data, and the second microwave data; or if the channel quality of the microwave channel meets the requirement, generate the CPRI frame based on the CW, the first microwave data, and the second microwave data.

The device further includes an EVM extractor 1260, configured to calculate an error vector magnitude EVM of the microwave channel, and send the EVM of the microwave channel to the data processor 1240.

The data processor 1240 is further configured to: receive the EVM of the microwave channel from the EVM extractor 1260; determine whether the EVM of the microwave channel is less than a maximum EVM required for the first I/Q data; and if the EVM of the microwave channel is less than the maximum EVM required for the first I/Q data, consider that the channel quality of the microwave channel meets the requirement; otherwise, consider that the channel quality of the microwave channel does not meet the requirement.

As described above, the EVM of the microwave channel may be used to determine whether the channel quality of the microwave channel meets the requirement, and in addition, the EVM may also be used to determine a specific demodulation scheme that needs to be used for the first microwave data. Details are as follows: It is determined that the EVM of the microwave channel falls between maximum EVMs required for which two modulation formats whose orders are adjacent to each other. The data processor 1240 determines, based on a modulation format whose order is lower in the modulation formats whose orders are adjacent to each other, the demodulation scheme that needs to be used for the first microwave data.

Optionally, in another embodiment, as shown in FIG. 13, the data processor 1240 specifically includes:

a splitter 1241, configured to: receive the first microwave data from the separator 1220; copy the first microwave data to obtain two pieces of first microwave data; and send a first piece of first microwave data to a second demodulator 1242, and send a second piece of first microwave data to a selector 1243;

the second demodulator 1242, configured to: receive the first microwave data from the splitter 1241; demodulate the first microwave data to obtain demodulated first microwave data; and send the demodulated first microwave data to the selector 1243; and

the selector 1243, configured to: receive the first microwave data from the splitter 1241; receive the demodulated first microwave data from the second demodulator 1242; determine whether the channel quality of the microwave channel meets the requirement; and if the channel quality of the microwave channel does not meet the requirement, send the demodulated first microwave data to the combiner 1250; or if the channel quality of the microwave channel meets the requirement, send the first microwave data to the combiner 1250.

Specifically, as shown in FIG. 13, the data processor 1240 further includes a decompressor 1244, configured to receive the demodulated first microwave data from the second demodulator 1242, decompress the demodulated first microwave data, and then send the decompressed first microwave data to the selector 1243.

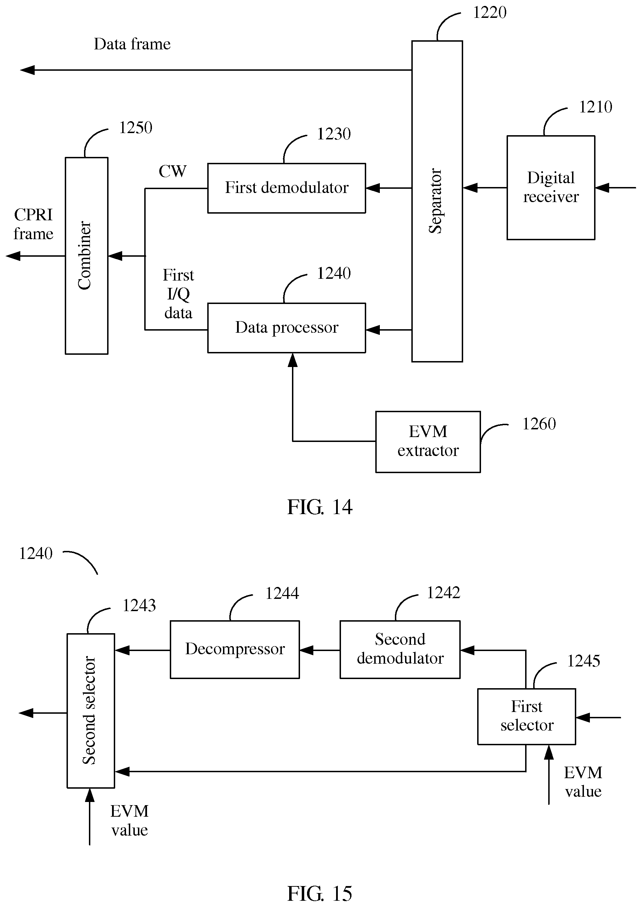

Optionally, in another embodiment, as shown in FIG. 14, the separator 1220 is further configured to separate a data frame from the microwave air interface frame.

The separator 1220 is further configured to extract identification information from the microwave air interface frame, and send the identification information to the data processor 1240, where the identification information is used to indicate the first microwave data and a specific demodulation scheme that needs to be used for the first microwave data. The data processor 1240 is further configured to receive the identification information from the separator 1220, and determine, based on the identification information, the demodulation scheme that needs to be used for the first microwave data.

Another embodiment of the present invention provides a microwave receiving device. Components included in the device are the same as those in the foregoing embodiment. A data processor 1240 is configured to: receive first microwave data from a separator 1220; determine whether channel quality of a microwave channel meets a requirement; and if the channel quality of the microwave channel does not meet the requirement, demodulate the first microwave data to obtain demodulated first microwave data, and send the demodulated first microwave data to a combiner 1250. Functions of other components are consistent with those described in the foregoing embodiment. Details are not described in this embodiment of the present invention again.

Optionally, in another embodiment, the data processor 1240 is further configured to: if the channel quality of the microwave channel meets the requirement, send the first microwave data to the combiner 1250. The combiner 1250 is further configured to receive the first microwave data from the data processor 1240, and generate a CPRI frame based on a CW and the first microwave data.

Further, as shown in FIG. 15, the data processor 1240 specifically includes:

a first selector 1245, configured to: receive the first microwave data from the separator 1220; determine whether the channel quality of the microwave channel meets the requirement; and if the channel quality of the microwave channel does not meet the requirement, send the first microwave data to a second demodulator 1242; or if the channel quality of the microwave channel meets the requirement, send the first microwave data to a second selector 1243;

the second demodulator 1242, configured to: receive the first microwave data from the first selector 1245; demodulate the first microwave data to obtain demodulated first microwave data; and send the demodulated first microwave data to the second selector 1243; and

the second selector 1243, configured to: receive the demodulated first microwave data from the second demodulator 1242; receive the first microwave data from the first selector 1245; determine whether the channel quality of the microwave channel meets the requirement; and if the channel quality of the microwave channel does not meet the requirement, send the demodulated first microwave data to the combiner 1250; or if the channel quality of the microwave channel meets the requirement, send the first microwave data to the combiner 1250.

Another embodiment of the present invention provides a data transmission system, including the microwave sending device according to claims 1 to 9 and the microwave receiving device according to claims 10 to 17.

The microwave sending device according to claims 1 to 9 is configured to: receive a CPRI frame; obtain a CW and antenna-carrier I/Q data from the CPRI frame, where the antenna-carrier I/Q data includes first I/Q data; modulate the CW to obtain a modulated CW; copy the first I/Q data to obtain two pieces of first I/Q data, and modulate a first piece of first I/Q data to obtain modulated first I/Q data; determine whether channel quality of a microwave channel meets a requirement; and if the channel quality of the microwave channel does not meet the requirement, generate a first microwave air interface frame based on the modulated first I/Q data and the modulated CW, and send the first microwave air interface frame by using the microwave channel.

The microwave receiving device according to claims 10 to 17 is configured to: receive a microwave air interface frame from a microwave air interface; obtain a modulated control word CW and first microwave data from the microwave air interface frame; demodulate the modulated CW to obtain a CW; copy the first microwave data to obtain two pieces of first microwave data, and demodulate a first piece of first microwave data to obtain demodulated first microwave data; determine whether channel quality of a microwave channel meets a requirement; and if the channel quality of the microwave channel does not meet the requirement, generate a CPRI frame based on the CW and the demodulated first microwave data, and send the CPRI frame to a BBU or an RRU connected to the microwave receiving device.

In the data transmission system provided in this embodiment of the present invention, the CW and the first I/Q data in the CPRI frame are separately processed. If the channel quality of the microwave channel does not meet the requirement, the first I/Q data is transmitted based on a lower order modulation format, so that a transmission distance requirement for a microwave system can be met without a need to reserve a large fade margin.

It should be understood that "one embodiment" or "an embodiment" mentioned in the whole specification means that a particular feature, structure, or characteristic related to the embodiment is included in at least one embodiment of the present invention. Therefore, "in one embodiment" or "in an embodiment" that appears throughout the whole specification does not necessarily mean a same embodiment. Moreover, the particular feature, structure, or characteristic may be combined in one or more embodiments in any proper manner. Sequence numbers of the foregoing processes do not mean execution sequences in various embodiments of the present invention. The execution sequences of the processes should be determined based on functions and internal logic of the processes, and should not be construed as any limitation on the implementation processes of the embodiments of the present invention.

What is described above is merely example embodiments of the technical solutions of the present invention, but is not intended to limit the protection scope of the present invention. Any modification or improvement made without departing from the principle of the present invention shall fall within the protection scope of the present invention.

## Claims

1. A microwave sending device, comprising:

   a receiver (810), configured to receive a common public radio interface, CPRI frame, and send the CPRI frame to a separator (820);
   the separator (820), configured to: receive the CPRI frame from the receiver (810); separate a control word, CW and antenna-carrier, I/Q data from the CPRI frame, wherein the antenna-carrier I/Q data comprises first I/Q data; and send the CW to a first modulator (830), and send the first I/Q data to a data processor (840);
   the first modulator (830), configured to: receive the CW from the separator (820); modulate the CW to obtain a modulated CW; and send the modulated CW to a combiner (850);
   the data processor (840), configured to: receive the first I/Q data from the separator (820); copy the first I/Q data to obtain two pieces of first I/Q data; modulate a first piece of first I/Q data to obtain modulated first I/Q data; determine whether channel quality of a microwave channel meets a requirement; and if the channel quality of the microwave channel does not meet the requirement, send the modulated first I/Q data to the combiner (850);
   the combiner (850), configured to: receive the modulated CW from the first modulator (830); receive the modulated first I/Q data from the data processor (840); generate a first microwave air interface frame based on the modulated first I/Q data and the modulated CW; and send the first microwave air interface frame to a digital transmitter (860); and
   the digital transmitter (860), configured to receive the first microwave air interface frame from the combiner (850), and send the first microwave air interface frame by using the microwave channel.

2. The device according to claim 1, wherein
   the data processor (840) is further configured to: if the channel quality of the microwave channel meets the requirement, send the first I/Q data to the combiner;
   the combiner (850) is further configured to: receive the first I/Q data from the data processor; generate a second microwave air interface frame based on the first I/Q data and the modulated CW; and send the second microwave air interface frame to the digital transmitter; and
   the digital transmitter (860) is further configured to receive the second microwave air interface frame from the combiner, and send the second microwave air interface frame by using the microwave channel.

3. The device according to claim 1 or 2, further comprising:

   an EVM receiver (870), configured to receive an error vector magnitude, EVM of the microwave channel, and send the EVM of the microwave channel to the data processor, wherein

the data processor (840) is specifically configured to: receive the EVM of the microwave channel from the EVM receiver; determine whether the EVM of the microwave channel is less than a maximum EVM required for the first I/Q data; and if the EVM of the microwave channel is less than the maximum EVM required for the first I/Q data, the channel quality of the microwave channel meets the requirement; otherwise, the channel quality of the microwave channel does not meet the requirement.

4. The device according to any one of claims 1 to 3, wherein
the receiver (810) is further configured to receive a data frame, and send the data frame to the combiner; and
the combiner (850) is further configured to: receive the data frame from the receiver; and if the channel quality of the microwave channel does not meet the requirement, generate the first microwave air interface frame based on the modulated first I/Q data, the modulated CW, and the data frame; or if the channel quality of the microwave channel meets the requirement, generate the second microwave air interface frame based on the first I/Q data, the modulated CW, and the data frame.

5. The device according to claim 4, further comprising:

a rate adjuster (880), configured to: receive the data frame from the receiver;
determine whether the channel quality of the microwave channel meets the requirement; and if the channel quality of the microwave channel meets the requirement, keep the data frame occupying first bandwidth, and send the data frame to the combiner; or if the channel quality of the microwave channel does not meet the requirement, change bandwidth occupied by the data frame into second bandwidth, and send the adjusted data frame to the combiner, wherein the data frame and the CPRI frame jointly occupy bandwidth of the microwave channel, and the second bandwidth is less than the first bandwidth.

6. The device according to claim 5, wherein further comprising:

an the EVM receiver (870), configured to send an EVM of the microwave channel to the rate adjuster; and
the rate adjuster (880) is specifically configured to: receive the EVM of the microwave channel from the EVM receiver (870); determine whether the EVM of the microwave channel is less than a maximum EVM required for the first I/Q data; and if the EVM of the microwave channel is less than the maximum EVM required for the first I/Q data, the channel quality of the microwave channel meets the requirement; otherwise, the channel quality of the microwave channel does not meet the requirement.

7. The device according to any one of claims 1 to 6, wherein the first I/Q data is higher order modulation I/Q data;
the separator (820) is further configured to separate second I/Q data from the CPRI frame, and send the second I/Q data to the combiner, wherein the second I/Q data is lower order modulation I/Q data; and
the combiner (850) is further configured to: receive the second I/Q data from the separator; generate the first microwave air interface frame based on the modulated first I/Q data, the modulated CW, and the second I/Q data; and generate the second microwave air interface frame based on the first I/Q data, the modulated CW, and the second I/Q data.

8. A microwave receiving device, comprising:

a digital receiver, configured to receive a microwave air interface frame from a microwave air interface, and send the microwave air interface frame to a separator;
the separator, configured to: receive the microwave air interface frame from the digital receiver; separate a modulated control word, CW and first microwave data from the microwave air interface frame; and send the modulated CW to a first demodulator, and send the first microwave data to a data processor;
the first demodulator, configured to: receive the modulated CW from the separator; demodulate the modulated CW to restore a CW; and send the CW to a combiner;
the data processor, configured to: receive the first microwave data from the separator; copy the first microwave data to obtain two pieces of first microwave data; demodulate a first piece of first microwave data to obtain demodulated first microwave data; determine whether channel quality of a microwave channel meets a requirement; and if the channel quality of the microwave channel does not meet the requirement, send the demodulated first microwave data to the combiner; and
the combiner, configured to: receive the CW from the first demodulator; receive the demodulated first microwave data from the data processor; and generate a common public radio interface, CPRI frame based on the CW and the demodulated first microwave data.

9. The device according to claim 8, wherein
the data processor is further configured to: if the channel quality of the microwave channel meets the requirement, send the first microwave data to the combiner; and
the combiner is further configured to receive the first microwave data from the data processor, and generate the CPRI frame based on the CW and the first microwave data.

10. The device according to claim 8 or 9, wherein the separator is further configured to separate a data frame from the microwave air interface frame.

11. The device according to any one of claims 8 to 10, further comprising:
an EVM extractor, configured to calculate an error vector magnitude, EVM of the microwave channel, and send the EVM of the microwave channel to the data processor.

12. The device according to any one of claims 8 to 11, wherein
the separator is further configured to separate second microwave data from the microwave air interface frame, and send the second microwave data to the combiner, wherein the second microwave data is lower order modulation I/Q data; and
the combiner is further configured to: if the channel quality of the microwave channel does not meet the requirement, generate the CPRI frame based on the CW, the demodulated first microwave data, and the second microwave data; or if the channel quality of the microwave channel meets the requirement, generate the CPRI frame based on the CW, the first microwave data, and the second microwave data.

13. A data sending method, comprising:

receiving a common public radio interface, CPRI frame, and obtaining a control word, CW and antenna-carrier, I/Q data from the CPRI frame, wherein the antenna-carrier I/Q data comprises first I/Q data;
modulating the CW to obtain a modulated CW;
copying the first I/Q data to obtain two pieces of first I/Q data, and modulating a first piece of first I/Q data to obtain modulated first I/Q data; and
determining whether channel quality of a microwave channel meets a requirement; and if the channel quality of the microwave channel does not meet the requirement, generating a first microwave air interface frame based on the modulated first I/Q data and the modulated CW, and sending the first microwave air interface frame by using the microwave channel; if the channel quality of the microwave channel meets the requirement, generating a second microwave air interface frame based on the first I/Q data and the modulated CW, and sending the second microwave air interface frame by using the microwave channel.

14. The method according to claim 13, wherein before the modulating the CW, the method further comprises:

receiving a data frame;
the generating a first microwave air interface frame based on the modulated first I/Q data and the modulated CW specifically comprises: generating the first microwave air interface frame based on the modulated first I/Q data, the modulated CW, and the data frame; and
the generating a second microwave air interface frame based on the first I/Q data and the modulated CW specifically comprises: generating the second microwave air interface frame based on the first I/Q data, the modulated CW, and the data frame.

15. The method according to claim 14, wherein the data frame and the CPRI frame jointly occupy bandwidth of the microwave channel, and after the determining whether channel quality of a microwave channel meets a requirement, the method further comprises:
if the channel quality of the microwave channel meets the requirement, occupying, by the data frame, first bandwidth; or if the channel quality of the microwave channel does not meet the requirement, changing bandwidth occupied by the data frame into second bandwidth, wherein the second bandwidth is less than the first bandwidth.

16. The method according to any one of claims 13 to 15, wherein the determining whether channel quality of a microwave channel meets a requirement specifically comprises:
determining whether an error vector magnitude, EVM of the microwave channel is less than a maximum EVM required for the first I/Q data; and if the EVM of the microwave channel is less than the maximum EVM required for the first I/Q data, the channel quality of the microwave channel meets the requirement; otherwise, the channel quality of the microwave channel does not meet the requirement.

17. The method according to any one of claims 13 to 16, wherein
the first I/Q data is higher order modulation I/Q data, and the antenna-carrier I/Q data further comprises second I/Q data, wherein the second I/Q data is lower order modulation I/Q data;
the generating a first microwave air interface frame based on the modulated first I/Q data and the modulated CW specifically comprises: generating the first microwave air interface frame based on the modulated first I/Q data, the modulated CW, and the second I/Q data; and
the generating a second microwave air interface frame based on the first I/Q data and the modulated CW specifically comprises: generating the second microwave air interface frame based on the first I/Q data, the modulated CW, and the second I/Q data.

18. A data receiving method, comprising:

receiving a microwave air interface frame from a microwave air interface, and obtaining a modulated control word, CW and first microwave data from the microwave air interface frame;
demodulating the modulated CW to obtain a CW;
copying the first microwave data to obtain two pieces of first microwave data, and demodulating a first piece of first microwave data to obtain demodulated first microwave data; and
determining whether channel quality of a microwave channel meets a requirement; and if the channel quality of the microwave channel does not meet the requirement, generating a common public radio interface, CPRI frame based on the CW and the demodulated first microwave data; if the channel quality of the microwave channel meets the requirement, generating the CPRI frame based on the CW and the first microwave data.

19. The method according to claim 18, after the receiving a microwave air interface frame from a microwave air interface, further comprising:
further obtaining a data frame from the microwave air interface frame.

20. The method according to claim 18 or 19, wherein the determining whether channel quality of a microwave channel meets a requirement specifically comprises:
determining whether an error vector magnitude, EVM of the microwave channel is less than a maximum EVM required for the first I/Q data; and if the EVM of the microwave channel is less than the maximum EVM required for the first I/Q data, the channel quality of the microwave channel meets the requirement; otherwise, the channel quality of the microwave channel does not meet the requirement.

21. A data transmission system, comprising:
the microwave sending device according to any one of claims 1 to 7 and the microwave receiving device according to any one of claims 8 to 12.

**Patentansprüche**

1. Mikrowellensendevorrichtung, Folgendes umfassend:

einen Empfänger (810), der konfiguriert ist, um einen Frame einer gemeinsamen öffentlichen Funkschnittstelle (common public radio interface - CPRI), CPRI-Frame, zu empfangen und den CPRI-Frame an einen Separator (820) zu senden;
den Separator (820), der konfiguriert ist zum: Empfangen des CPRI-Frames von dem Empfänger (810); Separieren eines Steuerworts (control word - CW) und von Antennenträger-I/Q-Daten von dem CPRI-Frame, wobei die Antennenträger-I/Q-Daten erste I/Q-Daten umfassen; und Senden des CW an einen ersten Modulator (830) und Senden der ersten I/Q-Daten an einen Datenprozessor (840);
den ersten Modulator (830), der konfiguriert ist zum:

Empfangen des CW von dem Separator (820); Modulieren des CW, um ein moduliertes CW zu erhalten; und Senden des modulierten CW an einen Kombinierer (850);
den Datenprozessor (840), der konfiguriert ist zum: Empfangen der ersten I/Q-Daten von dem Separator (820); Kopieren der ersten I/Q-Daten, um zwei Stücke der ersten I/Q-Daten zu erhalten; Modulieren eines ersten Stücks der ersten I/Q-Daten, um modulierte erste I/Q-Daten zu erhalten; Bestimmen, ob die Kanalqualität eines Mikrowellenkanals eine Anforderung erfüllt; und, wenn die Kanalqualität des Mikrowellenkanals die Anforderung nicht erfüllt, Senden der modulierten ersten I/Q-Daten an den Kombinierer (850); den Kombinierer (850), der konfiguriert ist zum: Empfangen des modulierten CW von dem ersten Modulator (830); Empfangen der modulierten ersten I/Q-Daten von dem Datenprozessor (840); Erzeugen eines ersten Mikrowellen-Luft-Schnittstellen-Frames basierend auf den modulierten ersten I/Q-Daten und dem modulierten CW; und Senden des ersten Mikrowellen-Luft-Schnittstellen-Frames an einen digitalen Übertrager (860); und den digitalen Übertrager (860), der konfiguriert ist, um den ersten Mikrowellen-Luft-Schnittstellen-Frame von dem Kombinierer (850) zu empfangen und den ersten Mikrowellen-Luft-Schnittstellen-Frame unter Verwendung des Mikrowellenkanals zu senden.

2. Vorrichtung nach Anspruch 1, wobei

der Datenprozessor (840) ferner konfiguriert ist, um: wenn die Kanalqualität des Mikrowellenkanals die Anforderung erfüllt, die ersten I/Q-Daten an den Kombinierer zu senden;

der Kombinierer (850) ferner konfiguriert ist zum: Empfangen der ersten I/Q-Daten von dem Datenprozessor; Erzeugen eines zweiten Mikrowellen-Luft-Schnittstellen-Frames basierend auf den ersten I/Q-Daten und dem modulierten CW; und Senden des zweiten Mikrowellen-Luft-Schnittstellen-Frames an den digitalen Übertrager; und

der digitale Übertrager (860) ferner konfiguriert ist, um den zweiten Mikrowellen-Luft-Schnittstellen-Frame von dem Kombinierer zu empfangen und den zweiten Mikrowellen-Luft-Schnittstellen-Frame unter Verwendung des Mikrowellenkanals zu senden.

3. Vorrichtung nach Anspruch 1 oder 2, ferner Folgendes umfassend:

einen EVM-Empfänger (870), der konfiguriert ist, um eine Fehlervektorgröße (error vector magnitude - EVM) des Mikrowellenkanals zu empfangen und die EVM des Mikrowellenkanals an den Datenprozessor zu senden, wobei

der Datenprozessor (840) speziell konfiguriert ist zum:

Empfangen der EVM des Mikrowellenkanals von dem EVM-Empfänger;

Bestimmen, ob die EVM des Mikrowellenkanals kleiner als eine für die ersten I/Q-Daten erforderliche maximale EVM ist; und,

wenn die EVM des Mikrowellenkanals kleiner als die für die ersten I/Q-Daten erforderliche maximale EVM ist, erfüllt die Kanalqualität des Mikrowellenkanals die Anforderung;

andernfalls erfüllt die Kanalqualität des Mikrowellenkanals nicht die Anforderung.

4. Vorrichtung nach einem der Ansprüche 1 bis 3, wobei

der Empfänger (810) ferner konfiguriert ist, um einen Daten-Frame zu empfangen und den Daten-Frame an den Kombinierer zu senden; und

der Kombinierer (850) ferner konfiguriert ist zum: Empfangen des Daten-Frames von dem Empfänger; und, wenn die Kanalqualität des Mikrowellenkanals die Anforderung nicht erfüllt, Erzeugen des ersten Mikrowellen-Luft-Schnittstellen-Frames basierend auf den modulierten ersten I/Q-Daten, dem modulierten CW und dem Daten-Frame; oder, wenn die Kanalqualität des Mikrowellenkanals die Anforderung erfüllt, Erzeugen des zweiten Mikrowellen-Luft-Schnittstellen-Frames basierend auf den ersten I/Q-Daten, dem modulierten CW und dem Daten-Frame.

5. Vorrichtung nach Anspruch 4, ferner Folgendes umfassend:

eine Rateneinstellvorrichtung (880), die konfiguriert ist, um: den Daten-Frame vom Empfänger zu empfangen; zu bestimmen, ob die Kanalqualität des Mikrowellenkanals die Anforderung erfüllt; und, wenn die Kanalqualität des Mikrowellenkanals die Anforderung erfüllt, den Daten-Frame, der die erste Bandbreite einnimmt, zu halten und den Daten-Frame an den Kombinierer zu senden; oder, wenn die Kanalqualität des Mikrowellenkanals die Anforderung nicht erfüllt, die vom Daten-Frame eingenommene Bandbreite in eine zweite Bandbreite zu ändern und den eingestellten Daten-Frame an den Kombinierer zu senden, wobei der Daten-Frame und der CPRI-Frame gemeinsam die Bandbreite des Mikrowellenkanals einnehmen und die zweite Bandbreite kleiner als die erste Bandbreite ist.

6. Vorrichtung nach Anspruch 5, welche ferner Folgendes umfasst:

einen EVM-Empfänger (870), der konfiguriert ist, um eine EVM des Mikrowellenkanals an die Rateneinstellvorrichtung zu senden; und

die Rateneinstellvorrichtung (880) speziell konfiguriert ist zum: Empfangen der EVM des Mikrowellenkanals von dem EVM-Empfänger (870); Bestimmen, ob die EVM des Mikrowellenkanals kleiner als eine für die ersten I/Q-Daten erforderliche maximale EVM ist; und, wenn die EVM des Mikrowellenkanals kleiner als die für die ersten I/Q-Daten erforderliche maximale EVM ist, erfüllt die Kanalqualität des Mikrowellenkanals die Anforderung; andernfalls erfüllt die Kanalqualität des Mikrowellenkanals nicht die Anforderung.

7. Vorrichtung nach einem der Ansprüche 1 bis 6, wobei die ersten I/Q-Daten Modulations-I/Q-Daten höherer Ordnung sind;
der Separator (820) ferner konfiguriert ist, um zweite I/Q-Daten von dem CPRI-Frame zu separieren und die zweiten I/Q-Daten an den Kombinierer zu senden, wobei die zweiten I/Q Daten Modulations-I/Q-Daten niedrigerer Ordnung sind; und
der Kombinierer (850) ferner konfiguriert ist zum: Empfangen der zweiten I/Q-Daten von dem Separator; Erzeugen des ersten Mikrowellen-Luft-Schnittstellen-Frames basierend auf den modulierten ersten I/Q-Daten, dem modulierten CW und den zweiten I/Q-Daten; und Erzeugen des zweiten Mikrowellen-Luft-Schnittstellen-Frames basierend auf den ersten I/Q-Daten, dem modulierten CW und den zweiten I/Q-Daten.

8. Mikrowellenempfangsvorrichtung, Folgendes umfassend:

einen digitalen Empfänger, der konfiguriert ist, um einen Mikrowellen-Luft-Schnittstellen-Frame von einer Mikrowellen-Luft-Schnittstelle zu empfangen und den Mikrowellen-Luft-Schnittstellen-Frame an einen Separator zu senden;
den Separator, der konfiguriert ist zum: Empfangen des Mikrowellen-Luft-Schnittstellen-Frames von dem digitalen Empfänger; Separieren eines modulierten Steuerworts, CW,und von ersten Mikrowellendaten von dem Mikrowellen-Luft-Schnittstellen-Frame; und Senden des modulierten CW an einen ersten Demodulator und Senden der ersten Mikrowellendaten an einen Datenprozessor;
den ersten Demodulator, der konfiguriert ist zum: Empfangen des modulierten CW von dem Separator; Demodulieren des modulierten CW, um ein CW wiederherzustellen; und Senden des CW an einen Kombinierer;
den Datenprozessor, der konfiguriert ist zum: Empfangen der ersten Mikrowellendaten von dem Separator; Kopieren der ersten Mikrowellendaten, um zwei Stücke der ersten Mikrowellendaten zu erhalten; Demodulieren eines ersten Stücks der ersten Mikrowellendaten, um demodulierte erste Mikrowellendaten zu erhalten; Bestimmen, ob die Kanalqualität eines Mikrowellenkanals eine Anforderung erfüllt; und, wenn die Kanalqualität des Mikrowellenkanals die Anforderung nicht erfüllt, Senden der demodulierten ersten Mikrowellendaten an den Kombinierer; und
den Kombinierer, der konfiguriert ist zum: Empfangen des CW von dem ersten Demodulator; Empfangen der demodulierten ersten Mikrowellendaten von dem Datenprozessor; und Erzeugen eines Frames einer gemeinsamen öffentlichen Funkschnittstelle (common public radio interface - CPRI), CPRI-Frames, basierend auf dem CW und den demodulierten ersten Mikrowellendaten.

9. Vorrichtung nach Anspruch 8, wobei
der Datenprozessor ferner konfiguriert ist, um: wenn die Kanalqualität des Mikrowellenkanals die Anforderung erfüllt, die ersten Mikrowellendaten an den Kombinierer zu senden; und der Kombinierer ferner konfiguriert ist, um die ersten Mikrowellendaten von dem Datenprozessor zu empfangen und den CPRI-Frame basierend auf dem CW und den ersten Mikrowellendaten zu erzeugen.

10. Vorrichtung nach Anspruch 8 oder 9, wobei der Separator ferner konfiguriert ist, um einen Daten-Frame von dem Mikrowellen-Luft-Schnittstellen-Frame zu separieren.

11. Vorrichtung nach einem der Ansprüche 8 bis 10, ferner Folgendes umfassend:
einen EVM-Extraktor, der zum Berechnen einer Fehlervektorgröße, EVM, des Mikrowellenkanals und zum Senden der EVM des Mikrowellenkanals an den Datenprozessor konfiguriert ist.

12. Vorrichtung nach einem der Ansprüche 8 bis 11, wobei
der Separator ferner konfiguriert ist, um zweite Mikrowellendaten von dem Mikrowellen-Luft-Schnittstellen-Frame zu separieren und die zweiten Mikrowellendaten an den Kombinierer zu senden, wobei die zweiten Mikrowellendaten Modulations-I/Q-Daten niedrigerer Ordnung sind; und
der Kombinierer ferner konfiguriert ist, um: wenn die Kanalqualität des Mikrowellenkanals die Anforderung nicht erfüllt, den CPRI-Frame basierend auf dem CW, den demodulierten ersten Mikrowellendaten und den zweiten Mikrowellendaten zu erzeugen; oder, wenn die Kanalqualität des Mikrowellenkanals die Anforderung erfüllt, den CPRI-Frame basierend auf dem CW, den ersten Mikrowellendaten und den zweiten Mikrowellendaten zu erzeugen.

13. Datensendeverfahren, Folgendes umfassend:

Empfangen eines Frames einer gemeinsamen öffentlichen Funkschnittstelle (common public radio interface - CPRI), CPRI-Frames, und Erhalten eines Steuerworts, CW, und von Antennenträger-I/Q-Daten von dem CPRI-Frame, wobei die Antennenträger-I/Q-Daten erste I/Q-Daten umfassen;
Modulieren des CW, um ein moduliertes CW zu erhalten;
Kopieren der ersten I/Q-Daten, um zwei Stücke der ersten I/Q-Daten zu erhalten, und Modulieren eines ersten Stücks der ersten I/Q-Daten, um modulierte erste I/Q-Daten zu erhalten; und
Bestimmen, ob die Kanalqualität eines Mikrowellenkanals eine Anforderung erfüllt; und, wenn die Kanalqualität des Mikrowellenkanals die Anforderung nicht erfüllt, Erzeugen eines ersten Mikrowellen-Luft-Schnittstellen-Frames basierend auf den modulierten ersten I/Q-Daten und dem modulierten CW und Senden des ersten Mikrowellen-Luft-Schnittstellen-Frames unter Verwendung des Mikrowellenkanals; wenn die Kanalqualität des Mikrowellenkanals die Anforderung erfüllt, Erzeugen eines zweiten Mikrowellen-Luft-Schnittstellen-Frames basierend auf den ersten I/Q-Daten und dem modulierten CW und Senden des zweiten Mikrowellen-Luft-Schnittstellen-Frames unter Verwendung des Mikrowellenkanals.

14. Verfahren nach Anspruch 13, wobei das Verfahren vor dem Modulieren des CW ferner Folgendes umfasst:

Empfangen eines Daten-Frames;
das Erzeugen eines ersten Mikrowellen-Luft-Schnittstellen-Frames basierend auf den modulierten ersten I/Q-Daten und dem modulierten CW umfasst insbesondere Folgendes: Erzeugen des ersten Mikrowellen-Luft-Schnittstellen-Frames basierend auf den modulierten ersten I/Q-Daten, dem modulierten CW und dem Daten-Frame; und
das Erzeugen eines zweiten Mikrowellen-Luft-Schnittstellen-Frames basierend auf den ersten I/Q-Daten und dem modulierten CW umfasst insbesondere Folgendes: Erzeugen des zweiten Mikrowellen-Luft-Schnittstellen-Frames basierend auf den ersten I/Q-Daten, dem modulierten CW und dem Daten-Frame.

15. Verfahren nach Anspruch 14, wobei der Daten-Frame und der CPRI-Frame gemeinsam die Bandbreite des Mikrowellenkanals einnehmen und nach dem Bestimmen, ob die Kanalqualität eines Mikrowellenkanals eine Anforderung erfüllt, das Verfahren ferner Folgendes umfasst:
wenn die Kanalqualität des Mikrowellenkanals die Anforderung erfüllt, Einnehmen der ersten Bandbreite durch den Daten-Frame; oder, wenn die Kanalqualität des Mikrowellenkanals die Anforderung nicht erfüllt, Ändern der von dem Daten-Frame eingenommenen Bandbreite in eine zweite Bandbreite, wobei die zweite Bandbreite kleiner als die erste Bandbreite ist.

16. Verfahren nach einem der Ansprüche 13 bis 15, wobei das Bestimmen, ob die Kanalqualität eines Mikrowellenkanals eine Anforderung erfüllt, insbesondere Folgendes umfasst:
Bestimmen, ob eine Fehlervektorgröße, EVM, des Mikrowellenkanals kleiner als eine maximale EVM ist, die für die ersten I/Q-Daten erforderlich ist; und, wenn die EVM des Mikrowellenkanals kleiner als die für die ersten I/Q-Daten erforderliche maximale EVM ist, erfüllt die Kanalqualität des Mikrowellenkanals die Anforderung; andernfalls erfüllt die Kanalqualität des Mikrowellenkanals nicht die Anforderung.

17. Verfahren nach einem der Ansprüche 13 bis 16, wobei
die ersten I/Q-Daten Modulations-I/Q-Daten höherer Ordnung sind und die Antennenträger-I/Q-Daten ferner zweite I/Q-Daten umfassen, wobei die zweiten I/Q-Daten Modulations-I/Q-Daten niedrigerer Ordnung sind;
das Erzeugen eines ersten Mikrowellen-Luft-Schnittstellen-Frames basierend auf den modulierten ersten I/Q-Daten und dem modulierten CW insbesondere Folgendes umfasst: Erzeugen des ersten Mikrowellen-Luft-Schnittstellen-Frames basierend auf den modulierten ersten I/Q-Daten, dem modulierten CW und den zweiten I/Q-Daten; und
das Erzeugen eines zweiten Mikrowellen-Luft-Schnittstellen-Frames basierend auf den ersten I/Q-Daten und dem modulierten CW insbesondere Folgendes umfasst: Erzeugen des zweiten Mikrowellen-Luft-Schnittstellen-Frames basierend auf den ersten I/Q-Daten, dem modulierten CW und den zweiten I/Q-Daten.

18. Datenempfangsverfahren, Folgendes umfassend:

Empfangen eines Mikrowellen-Luft-Schnittstellen-Frames von einer Mikrowellen-Luft-Schnittstelle und Erhalten eines modulierten Steuerworts, CW, und erster Mikrowellendaten von dem Mikrowellen-Luft-Schnittstellen-Frame;
Demodulieren des modulierten CW, um ein CW zu erhalten;

Kopieren der ersten Mikrowellendaten, um zwei Stücke der ersten Mikrowellendaten zu erhalten, und Demodulieren eines ersten Stücks der ersten Mikrowellendaten, um demodulierte erste Mikrowellendaten zu erhalten; und

Bestimmen, ob die Kanalqualität eines Mikrowellenkanals eine Anforderung erfüllt; und, wenn die Kanalqualität des Mikrowellenkanals die Anforderung nicht erfüllt, Erzeugen eines Frames einer gemeinsamen öffentlichen Funkschnittstelle (common public radio interface - CPRI), CPRI-Frames, basierend auf dem CW und den demodulierten ersten Mikrowellendaten; wenn die Kanalqualität des Mikrowellenkanals die Anforderung erfüllt, Erzeugen des CPRI-Frames basierend auf dem CW und den ersten Mikrowellendaten.

19. Verfahren nach Anspruch 18, nach dem Empfangen eines Mikrowellen-Luft-Schnittstellen-Frames von einer Mikrowellen-Luft-Schnittstelle ferner Folgendes umfassend:
weiteres Erhalten eines Daten-Frames von dem Mikrowellen-Luft-Schnittstellen-Frame.

20. Verfahren nach Anspruch 18 oder 19, wobei das Bestimmen, ob die Kanalqualität eines Mikrowellenkanals eine Anforderung erfüllt, insbesondere Folgendes umfasst:
Bestimmen, ob eine Fehlervektorgröße, EVM, des Mikrowellenkanals kleiner als eine maximale EVM ist, die für die ersten I/Q-Daten erforderlich ist; und, wenn die EVM des Mikrowellenkanals kleiner als die für die ersten I/Q-Daten erforderliche maximale EVM ist, erfüllt die Kanalqualität des Mikrowellenkanals die Anforderung; andernfalls erfüllt die Kanalqualität des Mikrowellenkanals nicht die Anforderung.

21. Datenübertragungssystem, Folgendes umfassend:
die Mikrowellensendevorrichtung nach einem der Ansprüche 1 bis 7 und Mikrowellenempfangsvorrichtung nach einem der Ansprüche 8 bis 12.

## Revendications

1. Dispositif d'envoi hertzien, comprenant :

un récepteur (810), configuré pour recevoir une trame d'interface radio publique commune, CPRI, et envoyer la trame CPRI à un séparateur (820) ;
le séparateur (820), configuré pour : recevoir la trame CPRI depuis le récepteur (810) ; séparer un mot de commande, CW, et des données I/Q de support d'antenne depuis la trame CPRI, dans lequel les données I/Q de support d'antenne comprennent des premières données I/Q ; et envoyer le CW à un premier modulateur (830), et envoyer les premières données I/Q à un processeur de données (840) ;
le premier modulateur (830), configuré pour : recevoir le CW depuis le séparateur (820) ; moduler le CW pour obtenir un CW modulé ;
et envoyer le CW modulé à un combineur (850) ;
le processeur de données (840), configuré pour : recevoir les premières données I/Q depuis le séparateur (820) ; copier les premières données I/Q pour obtenir deux premières données I/Q ;
moduler une première donnée I/Q pour obtenir des premières données I/Q modulées ; déterminer si la qualité de canal d'un canal hertzien satisfait à une exigence ; et si la qualité de canal du canal hertzien ne satisfait pas à l'exigence, envoyer les premières données I/Q modulées au combineur (850) ;
le combineur (850), configuré pour : recevoir le CW modulé depuis le premier modulateur (830) ; recevoir les premières données I/Q modulées depuis le processeur de données (840) ; générer une première trame d'interface radio hertzienne sur la base des premières données I/Q modulées et du CW modulé ; et envoyer la première trame d'interface radio hertzienne à un émetteur numérique (860) ; et
l'émetteur numérique (860), configuré pour recevoir la première trame d'interface radio hertzienne depuis le combineur (850), et envoyer la première trame d'interface radio hertzienne en utilisant le canal hertzien.

2. Dispositif selon la revendication 1, dans lequel le processeur de données (840) est en outre configuré pour : si la qualité de canal du canal hertzien satisfait à l'exigence, envoyer les premières données I/Q au combineur ;
le combineur (850) est en outre configuré pour : recevoir les premières données I/Q modulées depuis le processeur de données ; générer une seconde trame d'interface radio hertzienne sur la base des premières données I/Q modulées et du CW modulé ; et envoyer la seconde trame d'interface radio hertzienne à l'émetteur numérique ; et
l'émetteur numérique (860) est en outre configuré pour recevoir la seconde trame d'interface radio hertzienne depuis le combineur, et envoyer la seconde trame d'interface radio hertzienne en utilisant le canal hertzien.

**3.** Dispositif selon la revendication 1 ou 2, comprenant en outre :

un récepteur EVM (870), configuré pour recevoir une amplitude de vecteur d'erreur, EVM, du canal hertzien, et envoyer l'EVM du canal hertzien au processeur de données, dans lequel

le processeur de données (840) est configuré de manière spécifique pour : recevoir l'EVM du canal hertzien depuis le récepteur EVM ;

déterminer si l'EVM du canal hertzien est inférieure à une EVM maximale requise pour les premières données I/Q ; et si l'EVM du canal hertzien est inférieure à l'EVM maximale requise pour les premières données I/Q, la qualité de canal du canal hertzien satisfait à l'exigence ; sinon, la qualité de canal du canal hertzien ne satisfait pas à l'exigence.

**4.** Dispositif selon l'une quelconque des revendications 1 à 3, dans lequel

le récepteur (810) est en outre configuré pour recevoir une trame de données et envoyer la trame de données au combineur ; et

le combineur (850) est en outre configuré pour : recevoir la trame de données depuis le récepteur ; et si la qualité de canal du canal hertzien ne satisfait pas à l'exigence, générer la première trame d'interface radio hertzienne sur la base des premières données I/Q modulées, du CW modulé et de la trame de données ; ou si la qualité de canal du canal hertzien satisfait à l'exigence, générer la seconde trame d'interface radio hertzienne sur la base des premières données I/Q modulées, du CW modulé et de la trame de données.

**5.** Dispositif selon la revendication 4, comprenant en outre : un dispositif de réglage de débit (880), configuré pour : recevoir la trame de données depuis le récepteur ; déterminer si la qualité de canal du canal hertzien satisfait à l'exigence ; et si la qualité de canal du canal hertzien satisfait à l'exigence, conserver la trame de données occupant la première bande passante, et envoyer la trame de données au combineur ; ou si la qualité de canal du canal hertzien ne satisfait pas à l'exigence, modifier la bande passante occupée par la trame de données en une seconde bande passante, et envoyer la trame de données ajustée au combineur, dans lequel la trame de données et la trame CPRI occupent conjointement la bande passante du canal hertzien, et la seconde bande passante est inférieure à la première bande passante.

**6.** Dispositif selon la revendication 5, comprenant en outre :

un récepteur EVM (870), configuré pour envoyer un EVM du canal hertzien au dispositif de réglage de débit ; et

le dispositif de réglage de débit (880) est configuré de manière spécifique pour : recevoir l'EVM du canal hertzien depuis le récepteur EVM (870) ; déterminer si l'EVM du canal hertzien est inférieure à une EVM maximale requise pour les premières données I/Q ; et si l'EVM du canal hertzien est inférieure à l'EVM maximale requise pour les premières données I/Q, la qualité de canal du canal hertzien satisfait à l'exigence ; sinon, la qualité de canal du canal hertzien ne satisfait pas à l'exigence.

**7.** Dispositif selon l'une quelconque des revendications 1 à 6, dans lequel les premières données I/Q sont des données I/Q de modulation d'ordre supérieur ;

le séparateur (820) est en outre configuré pour séparer des secondes données I/Q depuis la trame CPRI et envoyer les secondes données I/Q au combineur, dans lequel les secondes données I/Q sont des données I/Q de modulation d'ordre inférieur ; et

le combineur (850) est en outre configuré pour : recevoir les secondes données I/Q depuis le séparateur ; générer la première trame d'interface radio hertzienne sur la base des premières données I/Q modulées, du CW modulé et des secondes données I/Q ; et générer la seconde trame d'interface radio hertzienne sur la base des premières données I/Q, du CW modulé et des secondes données I/Q.

**8.** Dispositif de réception hertzien, comprenant :

un récepteur numérique, configuré pour recevoir une trame d'interface radio hertzienne depuis une interface radio hertzienne, et envoyer la trame d'interface radio hertzienne à un séparateur ;

le séparateur, configuré pour : recevoir la trame d'interface radio hertzienne depuis le récepteur numérique ; séparer un mot de commande, CW, modulé et des premières données hyperfréquences depuis la trame d'interface radio hertzienne ; et envoyer le CW modulé à un premier démodulateur, et envoyer les premières données hyperfréquences à un processeur de données ;

le premier démodulateur, configuré pour : recevoir le CW modulé depuis le séparateur ; démoduler le CW modulé pour restaurer un CW ; et envoyer le CW à un combineur ;

le processeur de données, configuré pour : recevoir les premières données hyperfréquences depuis le séparateur ; copier les premières données hyperfréquences pour obtenir deux premières données hyperfréquences ; démoduler une première donnée hyperfréquences pour obtenir des premières données hyperfréquences démodulées ; déterminer si la qualité de canal d'un canal hertzien satisfait à une exigence ; et si la qualité de canal du canal hertzien ne satisfait pas à l'exigence, envoyer les premières données hyperfréquences démodulées au combineur ; et

le combineur, configuré pour : recevoir le CW depuis le premier démodulateur ; recevoir les premières données hyperfréquences démodulées depuis le processeur de données ; et générer une trame d'interface radio publique commune, CPRI, sur la base du CW et des premières données hyperfréquences démodulées.

9. Dispositif selon la revendication 8, dans lequel
le processeur de données est en outre configuré pour : si la qualité de canal du canal hertzien satisfait à l'exigence, envoyer les premières données hyperfréquences au combineur ; et
le combineur est en outre configuré pour recevoir les premières données hyperfréquences depuis le processeur de données, et générer la trame CPRI sur la base du CW et des premières données hyperfréquences.

10. Dispositif selon la revendication 8 ou 9, dans lequel le séparateur est en outre configuré pour séparer une trame de données depuis la trame d'interface radio hertzienne.

11. Dispositif selon l'une quelconque des revendications 8 à 10, comprenant en outre :
un extracteur EVM, configuré pour calculer une amplitude de vecteur d'erreur, EVM, du canal hertzien, et envoyer l'EVM du canal hertzien au processeur de données.

12. Dispositif selon l'une quelconque des revendications 8 à 11, dans lequel
le séparateur est en outre configuré pour séparer des secondes données hyperfréquences depuis la trame d'interface radio hertzienne et envoyer les secondes données hyperfréquences au combineur, dans lequel les secondes données hyperfréquences sont des données I/Q de modulation d'ordre inférieur ; et
le combineur est en outre configuré pour : si la qualité de canal du canal hertzien ne satisfait pas à l'exigence, générer la trame CPRI sur la base du CW, des premières données hyperfréquences démodulées et des secondes données hyperfréquences ; ou si la qualité de canal du canal hertzien satisfait à l'exigence, générer la trame CPRI sur la base du CW, des premières données hyperfréquences et des secondes données hyperfréquences.

13. Procédé d'envoi de données, comprenant :

la réception d'une trame d'interface radio publique commune, CPRI, et l'obtention d'un mot de commande, CW, et de données I/Q de support d'antenne depuis la trame CPRI, dans lequel les données I/Q de support d'antenne comprennent des premières données I/Q ;
la modulation du CW pour obtenir un CW modulé ;
la copie des premières données I/Q pour obtenir deux premières données I/Q, et la modulation d'une première donnée I/Q pour obtenir des premières données I/Q modulées ; et
le fait de déterminer si la qualité de canal d'un canal hertzien satisfait à une exigence ; et si la qualité de canal du canal hertzien ne satisfait pas à l'exigence, la génération d'une première trame d'interface radio hertzienne sur la base des premières données I/Q modulées et du CW modulé, et l'envoi de la première trame d'interface radio hertzienne en utilisant le canal hertzien ; si la qualité de canal du canal hertzien satisfait à l'exigence, la génération d'une seconde trame d'interface radio hertzienne sur la base des premières données I/Q et du CW modulé, et l'envoi de la seconde trame d'interface radio hertzienne en utilisant le canal hertzien.

14. Procédé selon la revendication 13, dans lequel, avant la modulation du CW, le procédé comprend en outre :

la réception d'une trame de données ;
la génération d'une première trame d'interface radio hertzienne sur la base des premières données I/Q modulées et du CW modulé comprend de manière spécifique : la génération de la première trame d'interface radio hertzienne sur la base des premières données I/Q modulées, du CW modulé et de la trame de données ; et
la génération d'une seconde trame d'interface radio hertzienne sur la base des premières données I/Q et du CW modulé comprend de manière spécifique : la génération de la seconde trame d'interface radio hertzienne sur la base des premières données I/Q, du CW modulé et de la trame de données.

15. Procédé selon la revendication 14, dans lequel la trame de données et la trame CPRI occupent conjointement la bande passante du canal hertzien, et après avoir déterminé si la qualité de canal d'un canal hertzien satisfait à une exigence, le procédé comprend en outre :

si la qualité de canal du canal hertzien satisfait à l'exigence, l'occupation, par la trame de données, de la première bande passante ; ou si la qualité de canal du canal hertzien ne satisfait pas à l'exigence, la modification de la bande passante occupée par la trame de données en une seconde bande passante, dans lequel la seconde bande passante est inférieure à la première bande passante.

16. Procédé selon l'une quelconque des revendications 13 à 15, dans lequel le fait de déterminer si la qualité de canal d'un canal hertzien satisfait à une exigence comprend de manière spécifique :

le fait de déterminer si une amplitude de vecteur d'erreur, EVM, du canal hertzien est inférieure à une EVM maximale requise pour les premières données I/Q ; et si l'EVM du canal hertzien est inférieure à l'EVM maximale requise pour les premières données I/Q, la qualité de canal du canal hertzien satisfait à l'exigence ;
sinon, la qualité de canal du canal hertzien ne satisfait pas à l'exigence.

17. Procédé selon l'une quelconque des revendications 13 à 16, dans lequel
les premières données I/Q sont des données I/Q de modulation d'ordre supérieur, et les données I/Q de support d'antenne comprennent en outre des secondes données I/Q, dans lequel les secondes données I/Q sont des données I/Q de modulation d'ordre inférieur ;
la génération d'une première trame d'interface radio hertzienne sur la base des premières données I/Q modulées et du CW modulé comprend de manière spécifique : la génération de la première trame d'interface radio hertzienne sur la base des premières données I/Q modulées, du CW modulé et des secondes données I/Q ; et
la génération d'une seconde trame d'interface radio hertzienne sur la base des premières données I/Q et du CW modulé comprend de manière spécifique : la génération de la seconde trame d'interface radio hertzienne sur la base des premières données I/Q, du CW modulé et des secondes données I/Q.

18. Procédé de réception de données, comprenant :

la réception d'une trame d'interface radio hertzienne depuis une interface radio hertzienne, et l'obtention d'un mot de commande, CW, modulé et de premières données hyperfréquences depuis la trame d'interface radio hertzienne ;
la démodulation du CW modulé pour obtenir un CW ;
la copie des premières données hyperfréquences pour obtenir deux premières données hyperfréquences, et la démodulation d'une première donnée hyperfréquences pour obtenir des premières données hyperfréquences démodulées ; et
le fait de déterminer si la qualité de canal d'un canal hertzien satisfait à une exigence ; et si la qualité de canal du canal hertzien ne satisfait pas à l'exigence, la génération d'une trame d'interface radio publique commune, CPRI, sur la base du CW et des premières données hyperfréquences démodulées ; si la qualité de canal du canal hertzien satisfait à l'exigence, la génération de la trame CPRI sur la base du CW et des premières données hyperfréquences.

19. Procédé selon la revendication 18, après la réception d'une trame d'interface radio hertzienne depuis une interface radio hertzienne, comprenant en outre :
le fait d'obtenir en outre une trame de données depuis la trame d'interface radio hertzienne.

20. Procédé selon la revendications 18 ou 19, dans lequel le fait de déterminer si la qualité de canal d'un canal hertzien satisfait à une exigence comprend de manière spécifique :

le fait de déterminer si une amplitude de vecteur d'erreur, EVM, du canal hertzien est inférieure à une EVM maximale requise pour les premières données I/Q ; et si l'EVM du canal hertzien est inférieure à l'EVM maximale requise pour les premières données I/Q, la qualité de canal du canal hertzien satisfait à l'exigence ;
sinon, la qualité de canal du canal hertzien ne satisfait pas à l'exigence.

21. Système de transmission de données, comprenant :
le dispositif d'envoi hertzien selon l'une quelconque des revendications 1 à 7 et le dispositif de réception hertzien selon l'une quelconque des revendications 8 à 12.

| User plane | Control management plane | | | SYNC |
|---|---|---|---|---|
| I/Q data | Vendor | Ethernet | HDLC | L1 in-band protocol |
| Time division multiplexing | | | | |
| Electrical transmission | | Optical transmission | | |

FIG. 1

W = 0 1 2 3 4 5 6 7 8 9 10 11 12 13 14 15

First byte

Second byte

Control word

Data words

**FIG. 2**

BBU — Microwave sending device — Microwave air interface — Microwave receiving device — RRU

**FIG. 3**

| Receive a CPRI frame, and obtain a control word CW and antenna-carrier I/Q data from the CPRI frame, where the antenna-carrier I/Q data includes first I/Q data | 401 |

| Modulate the CW to obtain a modulated CW | 402 |

| Copy the first I/Q data to obtain two pieces of first I/Q data, and modulate a first piece of first I/Q data to obtain modulated first I/Q data | 403 |

| Determine whether channel quality of a microwave channel meets a requirement; and if the channel quality of the microwave channel does not meet the requirement, generate a first microwave air interface frame based on the modulated first I/Q data and the modulated CW, and send the first microwave air interface frame by using the microwave channel | 404 |

| If the channel quality of the microwave channel meets the requirement, generate a second microwave air interface frame based on the first I/Q data and the modulated CW, and send the second microwave air interface frame by using the microwave channel | 405 |

FIG. 4

Receive a CPRI frame, and obtain a control word CW and antenna-carrier I/Q data from the CPRI frame, where the antenna-carrier I/Q data includes first I/Q data — 501

Modulate the CW to obtain a modulated CW — 502

Determine whether channel quality of a microwave channel meets a requirement; and if the channel quality of the microwave channel does not meet the requirement, modulate the first I/Q data to obtain modulated first I/Q data, generate a first microwave air interface frame based on the modulated first I/Q data and the modulated CW, and send the first microwave air interface frame by using the microwave channel — 503

If the channel quality of the microwave channel meets the requirement, generate a second microwave air interface frame based on the first I/Q data and the modulated CW, and send the second microwave air interface frame by using the microwave channel — 504

FIG. 5

| | |
|---|---|
| Receive a microwave air interface frame from a microwave air interface, and obtain a modulated CW and first microwave data from the microwave air interface frame | 601 |

| | |
|---|---|
| Demodulate the modulated CW to obtain a CW | 602 |

| | |
|---|---|
| Copy the first microwave data to obtain two pieces of first microwave data, and demodulate a first piece of first microwave data to obtain demodulated first microwave data | 603 |

| | |
|---|---|
| Determine whether channel quality of a microwave channel meets a requirement; and if the channel quality of the microwave channel does not meet the requirement, generate a CPRI frame based on the CW and the demodulated first microwave data | 604 |

| | |
|---|---|
| If the channel quality of the microwave channel meets the requirement, generate the CPRI frame based on the CW and the first microwave data | 605 |

FIG. 6

Receive a microwave air interface frame from a microwave air interface, and obtain a modulated CW and first microwave data from the microwave air interface frame ⟋ 701

Demodulate the modulated CW to obtain a CW ⟋ 702

Determine whether channel quality of a microwave channel meets a requirement; and if the channel quality of the microwave channel does not meet the requirement, demodulate the first microwave data to obtain demodulated first microwave data, and generate a CPRI frame based on the CW and the demodulated first microwave data ⟋ 703

If the channel quality of the microwave channel meets the requirement, generate the CPRI frame based on the CW and the first microwave data ⟋ 704

FIG. 7

FIG. 8

FIG. 9

FIG. 10

FIG. 11

FIG. 12

FIG. 13

FIG. 14

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102118191